# EUROPEAN PATENT APPLICATION

(11) **EP 4 700 266 A1**
(43) Date of publication of application: **25.02.2026**
(21) Application number: 23935030.9
(22) Date of filing: 17.11.2023
(51) Int. Cl.: F16L 43/02, F16L 21/08, H01M 10/613

(54) **CONNECTOR, COOLING DEVICE, BATTERY AND ELECTRIC APPARATUS**

(30) Priority: 24.04.2023 CN 202310447217
(71) Applicant: Contemporary Amperex Technology Co., Limited, Ningde, Fujian 352100 (CN)
(72) Inventor: ZHOU, Cong, Ningde, Fujian 352100 (CN)
(74) Representative: Gong, Jinping
(86) International application number: PCT/CN2023/132462
(87) International publication number: WO 2024/221862

(57) **Abstract**

The present application provides a connector (11), a cooling apparatus (10), a battery (100), and an electric device. The connector (11) includes a first coupling (111), a second coupling (112), an identification portion (113), and a shielding member (114). The second coupling (112) is connected to the first coupling (111). The identification portion (113) is configured to be identified by an external apparatus. Under the condition that the first coupling (111) and the second coupling (112) are not properly connected, the shielding member (114) shields the identification portion (113), and under the condition that the first coupling (111) and the second coupling (112) are properly connected, the identification portion (113) is uncovered by the shielding member (114) and exposed to an external environment of the connector (11), or the identification portion (113) is capable of being exposed to the external environment of the connector (11) via an identification window provided on the shielding member (114).

## Description

### CROSS-REFERENCE TO RELATED APPLICATIONS

The present application makes reference to Chinese Patent Application No. 202310447217.6, filed on April 24, 2023 and entitled "CONNECTOR, COOLING APPARATUS, BATTERY, AND ELECTRIC DEVICE," which is incorporated herein by reference in its entirety.

### TECHNICAL FIELD

The present application relates to the field of connector technologies, and more particularly, to a connector, a cooling apparatus, a battery, and an electric device.

### BACKGROUND

Currently, two tubes in a cooling apparatus are typically connected using a connector. Specifically, a tube is connected to a first coupling of a connector, another tube is connected to a second coupling of the connector, and the first coupling is connected to the second coupling to connect the two tubes. However, during actual use, working personnel face difficulty in accurately determining whether the first coupling and the second coupling of the connector are properly connected. In cases where the first coupling and the second coupling of the connector are not properly connected, leakage occurs between the first coupling and the second coupling, which is detrimental to enhancing reliability of the cooling apparatus.

### SUMMARY

The objective of embodiments of the present application is to provide a connector, a cooling apparatus, a battery, and an electric device to address a technical problem in related art where difficulty exists in accurately determining whether a first coupling and a second coupling of a connector are properly connected.

To achieve the above objective, an embodiment of the present application provides a connector, including:
a first coupling;
a second coupling, connected to the first coupling;
an identification portion, configured to be identified by an external apparatus;
a shielding member, where under the condition that the first coupling and the second coupling are not properly connected, the shielding member shields the identification portion; under the condition that the first coupling and the second coupling are properly connected, the identification portion is uncovered by the shielding member and exposed to an external environment of the connector, or the identification portion is capable of being exposed to the external environment of the connector via an identification window provided on the shielding member.

The connector provided in this embodiment of the present application has at least the following beneficial effects: The connector provided in this embodiment of the present application includes an identification portion and a shielding member, where the identification portion is capable of being identified by an external apparatus. Under the condition that the first coupling and the second coupling are not properly connected, the shielding member shields the identification portion, and the external apparatus is unable to identify the identification portion. Under the condition that the first coupling and the second coupling are properly connected, the identification portion is uncovered by the shielding member and exposed to an external environment of the connector, or the identification portion is capable of being exposed to the external environment of the connector via an identification window provided on the shielding member, and the external apparatus is capable of identifying the identification portion. In other words, when the external apparatus is unable to identify the identification portion, a determination is made that the first coupling and the second coupling are not properly connected; and when the external apparatus is capable of identifying the identification portion, a determination is made that the first coupling and the second coupling are properly connected. Thus, working personnel are capable of accurately determining whether the first coupling and the second coupling of the connector are properly connected, enabling working personnel to promptly rework the connector in cases where the first coupling and the second coupling are not properly connected, thereby reducing a risk of leakage in the connector.

In some embodiments of the present application, the connector further includes a movable member, the identification portion is disposed on the movable member, and under the condition that the first coupling and the second coupling are properly connected, the second coupling pushes the movable member to move along a first direction, such that the identification portion is uncovered by the shielding member and exposed to the external environment of the connector, or the identification portion is capable of being exposed to the external environment of the connector via the identification window, the first direction being a direction from the second coupling toward the first coupling.

By adopting the above technical solution, under the condition that the first coupling and the second coupling are properly connected, the second coupling pushes the movable member to move along the first direction, and the movable member moves to a preset position along the first direction, such that the identification portion is uncovered by the shielding member and exposed to the external environment of the connector, or the identification portion is capable of being exposed to the external environment of the connector via the identification window, facilitating recognition of the identification portion by the external apparatus.

In some embodiments of the present application, the connector includes a slide groove extending along the first direction, and the movable member is slidably disposed within the slide groove.

By adopting the above technical solution, a movement direction of the movable member is effectively restricted, thereby effectively enhancing stability of movement of the movable member.

In some embodiments of the present application, a drive structure is provided between a groove wall of the slide groove and the movable member; under the condition that the first coupling and the second coupling are properly connected, the second coupling pushes the movable member to trigger the drive structure, and the drive structure provides a driving force for the movable member to move along the first direction, such that the identification portion is uncovered by the shielding member and exposed to the external environment of the connector, or the identification portion is capable of being exposed to the external environment of the connector via the identification window.

By adopting the above technical solution, under the condition that the first coupling and the second coupling are properly connected, the second coupling pushes the movable member to trigger the drive structure; under a driving action of the drive structure, the movable member is capable of moving along the first direction. When the drive structure is triggered, working personnel are capable of preliminarily determining that the first coupling and the second coupling are properly connected. Under the condition that the movable member moves to the preset position along the first direction, the identification portion is uncovered by the shielding member and exposed to the external environment of the connector, or the identification portion is capable of being exposed to the external environment of the connector via the identification window, and the external apparatus is capable of identifying the identification portion, enabling working personnel to further confirm that the first coupling and the second coupling are properly connected, thereby further enhancing accuracy of working personnel in determining whether the first coupling and the second coupling are properly connected.

In some embodiments of the present application, the slide groove includes a first groove wall, a first pressing portion is protrudingly provided on the first groove wall, the movable member includes a main body portion and a first elastic arm, the identification portion is disposed on the main body portion, the first elastic arm is disposed at an end of the main body portion proximate to the second coupling, and the first elastic arm elastically presses against the first pressing portion to form the drive structure.

By adopting the above technical solution, under the condition that the first coupling and the second coupling are properly connected, the first elastic arm elastically presses against the first pressing portion, causing the first elastic arm to undergo elastic deformation and generate an elastic force; under a combined action of the elastic force and a pushing inertia of the second coupling, the first elastic arm separates from the first pressing portion, thereby driving the movable member to move to the preset position along the first direction, such that the identification portion is uncovered by the shielding member and exposed to the external environment of the connector, or the identification portion is capable of being exposed to the external environment of the connector via the identification window.

In some embodiments of the present application, the first pressing portion includes a first protruding portion and a first inclined surface. The first protruding portion is protrudingly provided on the first groove wall, the first inclined surface is located on a side of the first protruding portion facing away from the second coupling and connects between the first groove wall and an end of the first protruding portion facing away from the first groove wall, and the first protruding portion and the first inclined surface sequentially elastically press against the first elastic arm along the first direction.

By adopting the above technical solution, under the condition that the first coupling and the second coupling are properly connected, the first elastic arm first elastically presses against the first protruding portion, causing the first elastic arm to undergo elastic deformation and generate an elastic force; under a combined action of the elastic force and a pushing inertia of the second coupling, the first elastic arm separates from the first protruding portion and elastically presses against the first inclined surface, and subsequently the first elastic arm gradually returns to its original position along an inclination direction of the first inclined surface. This enables the drive structure to continuously provide a driving force for the movable member to move along the first direction until the first elastic arm separates from the first inclined surface, thereby driving the movable member to move to the preset position along the first direction, such that the identification portion is uncovered by the shielding member and exposed to the external environment of the connector, or the identification portion is capable of being exposed to the external environment of the connector via the identification window.

In some embodiments of the present application, the first elastic arm includes a first arm body disposed on the main body portion and a second pressing portion protrudingly provided on the first arm body, and the second pressing portion presses against the first pressing portion.

By adopting the above technical solution, an elastic deformation amplitude of the first elastic arm is effectively increased, thereby effectively enhancing a driving force provided by the drive structure to the movable member, ensuring that the movable member is capable of moving to the preset position along the first direction, such that the identification portion is uncovered by the shielding member and exposed to the external environment of the connector, or the identification portion is capable of being exposed to the external environment of the connector via the identification window.

In some embodiments of the present application, the second pressing portion includes a second protruding portion and a second inclined surface, the second protruding portion is protrudingly provided on the first arm body, and the second inclined surface is located on a side of the second protruding portion facing away from the second coupling and connects between the first arm body and an end of the second protruding portion facing away from the first arm body.

By adopting the above technical solution, under a pushing action of the second coupling, the first pressing portion first presses against the second inclined surface, causing the first elastic arm to gradually undergo elastic deformation along an inclination direction of the second inclined surface until the second protruding portion presses against the first pressing portion, thereby achieving pressing of the second protruding portion against the first pressing portion, effectively enhancing smoothness of movement of the movable member along the first direction.

In some embodiments of the present application, the slide groove includes a second groove wall disposed opposite to the first groove wall, a third pressing portion is protrudingly provided on the second groove wall, the movable member further includes a second elastic arm, the second elastic arm is disposed opposite to the first elastic arm and at an end of the main body portion proximate to the second coupling, the first elastic arm elastically presses against the first pressing portion, and the second elastic arm elastically presses against the third pressing portion to form the drive structure.

By adopting the above technical solution, forces on opposite sides of the movable member are more balanced, effectively reducing a tilt amplitude of the movable member relative to the first direction, thereby effectively enhancing smoothness of movement of the movable member and effectively increasing a driving force provided by the drive structure to the movable member, ensuring that the movable member is capable of moving to the preset position along the first direction.

In some embodiments of the present application, the third pressing portion includes a third protruding portion and a third inclined surface, the third protruding portion is protrudingly provided on the second groove wall, the third inclined surface is located on a side of the third protruding portion facing away from the second coupling and connects between the second groove wall and an end of the third protruding portion facing away from the second groove wall, and the third protruding portion and the third inclined surface sequentially elastically press against the second elastic arm along the first direction.

By adopting the above technical solution, under the condition that the first coupling and the second coupling are properly connected, the second elastic arm first elastically presses against the third protruding portion, causing the second elastic arm to undergo elastic deformation and generate an elastic force; and under a combined action of the elastic force and a pushing inertia of the second coupling, the second elastic arm separates from the third protruding portion and elastically presses against the third inclined surface, and subsequently the second elastic arm gradually returns to its original position along an inclination direction of the third inclined surface. This enables the drive structure to continuously provide a driving force for the movable member to move along the first direction until the second elastic arm separates from the third inclined surface, thereby driving the movable member to move to the preset position along the first direction, such that the identification portion is uncovered by the shielding member and exposed to the external environment of the connector, or the identification portion is capable of being exposed to the external environment of the connector via the identification window.

In some embodiments of the present application, the second elastic arm includes a second arm body disposed on the main body portion and a fourth pressing portion protrudingly provided on the second arm body, and the fourth pressing portion presses against the third pressing portion.

By adopting the above technical solution, an elastic deformation amplitude of the second elastic arm is effectively increased, thereby effectively enhancing a driving force provided by the drive structure to the movable member, ensuring that the movable member is capable of moving to the preset position along the first direction, such that the identification portion is uncovered by the shielding member and exposed to the external environment of the connector, or the identification portion is capable of being exposed to the external environment of the connector via the identification window.

In some embodiments of the present application, the fourth pressing portion includes a fourth protruding portion and a fourth inclined surface, the fourth protruding portion is protrudingly provided on the second arm body, and the fourth inclined surface is located on a side of the fourth protruding portion facing away from the second coupling and connects between the second arm body and an end of the fourth protruding portion facing away from the second arm body.

By adopting the above technical solution, under a pushing action of the second coupling, the third pressing portion first presses against the fourth inclined surface, causing the second elastic arm to gradually undergo elastic deformation along an inclination direction of the fourth inclined surface until the fourth protruding portion presses against the third pressing portion, thereby achieving pressing of the fourth protruding portion against the third pressing portion, effectively enhancing smoothness of movement of the movable member along the first direction.

In some embodiments of the present application, the first elastic arm is capable of pressing against the first groove wall after separating from the first pressing portion, and/or the second elastic arm is capable of pressing against the second groove wall after separating from the third pressing portion.

By adopting the above technical solution, a frictional force is generated between the movable member and a groove wall of the slide groove, which overcomes a gravitational force of the movable member or other external forces acting on the movable member, enabling the movable member to remain stationary at the preset position, thereby reducing a risk of the external apparatus failing to identify the identification portion due to the movable member deviating from the preset position, effectively enhancing reliability of the connector.

In some embodiments of the present application, a width of the main body portion is greater than a distance between the first pressing portion and the third pressing portion.

By adopting the above technical solution, a risk of the movable member separating from the slide groove via a port of the slide groove proximate to the second coupling is reduced, thereby effectively enhancing reliability of the connector.

In some embodiments of the present application, the slide groove includes a first groove wall, a third elastic arm is provided on the first groove wall, the movable member includes a main body portion and a fifth pressing portion, the identification portion is disposed on the main body portion, the fifth pressing portion is disposed at an end of the main body portion proximate to the second coupling, and the third elastic arm elastically presses against the fifth pressing portion to form the drive structure.

By adopting the above technical solution, under the condition that the first coupling and the second coupling are properly connected, the third elastic arm elastically presses against the fifth pressing portion, causing the third elastic arm to undergo elastic deformation and generate an elastic force; and under a combined action of the elastic force and a pushing inertia of the second coupling, the third elastic arm separates from the fifth pressing portion, thereby driving the movable member to move to the preset position along the first direction, such that the identification portion is uncovered by the shielding member and exposed to the external environment of the connector, or the identification portion is capable of being exposed to the external environment of the connector via the identification window.

In some embodiments of the present application, a fifth inclined surface is provided on a side of the fifth pressing portion facing the first groove wall, the fifth inclined surface inclines from a side of the main body portion toward the first groove wall in a direction away from the first groove wall, and the third elastic arm elastically presses against the fifth inclined surface.

By adopting the above technical solution, under the condition that the first coupling and the second coupling are properly connected, the third elastic arm elastically presses against the fifth inclined surface, causing the third elastic arm to gradually return to its original position along an inclination direction of the fifth inclined surface. This enables the drive structure to continuously provide a driving force for the movable member to move along the first direction until the third elastic arm separates from the fifth inclined surface, thereby driving the movable member to move to the preset position along the first direction, such that the identification portion is uncovered by the shielding member and exposed to the external environment of the connector, or the identification portion is capable of being exposed to the external environment of the connector via the identification window.

In some embodiments of the present application, the third elastic arm includes a third arm body disposed on the first groove wall and a sixth pressing portion protrudingly provided on the third arm body, and the sixth pressing portion presses against the fifth pressing portion.

By adopting the above technical solution, an elastic deformation amplitude of the third elastic arm is effectively increased, thereby effectively enhancing a driving force provided by the drive structure to the movable member, ensuring that the movable member is capable of moving to the preset position along the first direction, such that the identification portion is uncovered by the shielding member and exposed to the external environment of the connector, or the identification portion is capable of being exposed to the external environment of the connector via the identification window.

In some embodiments of the present application, the sixth pressing portion includes a fifth protruding portion and a sixth inclined surface, the fifth protruding portion is protrudingly provided on the third arm body, and the sixth inclined surface is located on a side of the fifth protruding portion facing the second coupling and connects between the third arm body and an end of the fifth protruding portion facing away from the third arm body.

By adopting the above technical solution, during movement of the movable member along the first direction, the main body portion first presses against the sixth inclined surface, causing the third elastic arm to gradually undergo elastic deformation along an inclination direction of the sixth inclined surface until the fifth protruding portion presses against the main body portion, and as the movable member moves along the first direction, pressing of the fifth protruding portion against the fifth pressing portion is achieved, thereby effectively enhancing smoothness of movement of the movable member along the first direction.

In some embodiments of the present application, the first groove wall is recessed to provide a first accommodating cavity, and at least a portion of the third elastic arm is accommodated within the first accommodating cavity.

By adopting the above technical solution, a width of the slide groove is effectively reduced, thereby making a structure of the shielding member more compact.

In some embodiments of the present application, the slide groove includes a second groove wall disposed opposite to the first groove wall, a fourth elastic arm is provided on the second groove wall, the third elastic arm elastically presses against the fifth pressing portion, and the fourth elastic arm elastically presses against the fifth pressing portion to form the drive structure.

By adopting the above technical solution, forces on opposite sides of the movable member are more balanced, effectively reducing a tilt amplitude of the movable member relative to the first direction, thereby effectively enhancing smoothness of movement of the movable member and effectively increasing a driving force provided by the drive structure to the movable member, ensuring that the movable member is capable of moving to the preset position along the first direction.

In some embodiments of the present application, a seventh inclined surface is provided on a side of the fifth pressing portion facing the second groove wall, the seventh inclined surface inclines from a side of the main body portion toward the second groove wall in a direction away from the second groove wall, and the fourth elastic arm elastically presses against the seventh inclined surface.

By adopting the above technical solution, under the condition that the first coupling and the second coupling are properly connected, the fourth elastic arm elastically presses against the seventh inclined surface, causing the fourth elastic arm to gradually return to its original position along an inclination direction of the seventh inclined surface. This enables the drive structure to continuously provide a driving force for the movable member to move along the first direction until the fourth elastic arm separates from the seventh inclined surface, thereby driving the movable member to move to the preset position along the first direction, such that the identification portion is uncovered by the shielding member and exposed to the external environment of the connector, or the identification portion is capable of being exposed to the external environment of the connector via the identification window.

In some embodiments of the present application, the fourth elastic arm includes a fourth arm body disposed on the second groove wall and a seventh pressing portion protrudingly provided on the fourth arm body, and the seventh pressing portion presses against the fifth pressing portion.

By adopting the above technical solution, an elastic deformation amplitude of the fourth elastic arm is effectively increased, thereby effectively enhancing a driving force provided by the drive structure to the movable member, ensuring that the movable member is capable of moving to the preset position along the first direction, such that the identification portion is uncovered by the shielding member and exposed to the external environment of the connector, or the identification portion is capable of being exposed to the external environment of the connector via the identification window.

In some embodiments of the present application, the seventh pressing portion includes a sixth protruding portion and an eighth inclined surface, the sixth protruding portion is protrudingly provided on the fourth arm body, and the eighth inclined surface is located on a side of the sixth protruding portion facing the second coupling and connects between the fourth arm body and an end of the sixth protruding portion facing away from the fourth arm body.

By adopting the above technical solution, under a pushing action of the second coupling, the main body portion first presses against the eighth inclined surface, causing the fourth elastic arm to gradually undergo elastic deformation along an inclination direction of the eighth inclined surface until the sixth protruding portion presses against the main body portion, and as the movable member moves along the first direction, pressing of the sixth protruding portion against the fifth pressing portion is achieved, thereby effectively enhancing smoothness of movement of the movable member along the first direction.

In some embodiments of the present application, the second groove wall is recessed to provide a second accommodating cavity, and at least a portion of the fourth elastic arm is accommodated within the second accommodating cavity.

By adopting the above technical solution, a width of the slide groove is effectively reduced, thereby making a structure of the shielding member more compact.

In some embodiments of the present application, a limiting structure is provided between a groove wall of the slide groove and the movable member, and the limiting structure is configured to restrict a movement distance of the movable member along the first direction.

By adopting the above technical solution, the movable member is capable of moving to the preset position more accurately, thereby effectively enhancing reliability of the connector.

In some embodiments of the present application, the limiting structure includes a first limiting portion and a second limiting portion, the first limiting portion is protrudingly provided on a groove wall of the slide groove, the second limiting portion is protrudingly provided on the movable member, and the first limiting portion is configured to abut against the second limiting portion.

By adopting the above technical solution, accurate movement of the movable member to the preset position is effectively achieved, thereby effectively enhancing reliability of the connector.

In some embodiments of the present application, the first limiting portion is disposed at an end of the slide groove facing away from the second coupling.

By adopting the above technical solution, the movable member is capable of moving to the preset position more accurately, and a risk of the movable member separating from the slide groove and falling out via a port of the slide groove facing away from the second coupling during movement is reduced, thereby effectively enhancing reliability of the connector.

In some embodiments of the present application, the slide groove passes through an end of the shielding member facing away from the second coupling to form a first groove opening, and a first chamfered surface is provided on at least one side of an end of the movable member facing the second coupling; and/or
the slide groove passes through an end of the shielding member facing the second coupling to form a second groove opening, and a second chamfered surface is provided on at least one side of an end of the movable member facing away from the second coupling.

By adopting the above technical solution, the movable member is capable of being assembled into the slide groove along the chamfered surface, facilitating assembly of the movable member, thereby effectively enhancing ease of use of the connector.

In some embodiments of the present application, an end of the movable member facing away from the second coupling is a pulling end, and under the condition that the first coupling and the second coupling are properly connected, the second coupling pushes the movable member, causing the pulling end to extend outside the shielding member.

By adopting the above technical solution, under the condition that the first coupling and the second coupling are properly connected, working personnel are capable of grasping the pulling end to remove the movable member from the slide groove, and the external apparatus is capable of identifying the identification portion, thereby further enhancing accuracy of working personnel in determining whether the first coupling and the second coupling are properly connected.

In some embodiments of the present application, the pulling end is provided with a gripping opening and/or an anti-slip structure.

By adopting the above technical solution, it is convenient for working personnel to grasp the pulling end and remove the movable member from the slide groove.

In some embodiments of the present application, the first coupling includes a coupling main body and a first snap-fit member connected to the coupling main body, and the first snap-fit member is snap-fitted to the second coupling.

By adopting the above technical solution, it is convenient to connection the first coupling and the second coupling together.

In some embodiments of the present application, under the condition that the first coupling and the second coupling are not properly connected, an end of the movable member proximate to the second coupling is disposed between the coupling main body and the first snap-fit member.

By adopting the above technical solution, under the condition that the first coupling and the second coupling are not properly connected, the first snap-fit member serves to shield an end of the movable member proximate to the second coupling, thereby reducing a risk of the movable member moving along the first direction due to collision with external objects, effectively enhancing reliability of the connector.

In some embodiments of the present application, the first coupling further includes a second snap-fit member snap-fitted to the second coupling, and the first snap-fit member and the second snap-fit member are disposed on opposite sides of the coupling main body.

By adopting the above technical solution, connection stability between the first coupling and the second coupling is effectively enhanced, thereby further reducing a risk of leakage in the connector.

In some embodiments of the present application, the identification portion is disposed on the first coupling, and under the condition that the first coupling and the second coupling are properly connected, the second coupling pushes the shielding member to move along the first direction, such that the identification portion is uncovered by the shielding member and exposed to the external environment of the connector, or the identification portion is capable of being exposed to the external environment of the connector via the identification window, where the first direction is a direction from the second coupling toward the first coupling.

By adopting the above technical solution, under the condition that the first coupling and the second coupling are properly connected, the second coupling pushes the shielding member to move along the first direction, and the shielding member moves to a preset position along the first direction, such that the identification portion is uncovered by the shielding member and exposed to the external environment of the connector, or the identification portion is capable of being exposed to the external environment of the connector via the identification window, facilitating recognition of the identification portion by the external apparatus.

An embodiment of the present application further provides a cooling apparatus, including a first tube, a second tube, and the connector according to any one of the above embodiments, where the first tube is connected to the first coupling, and the second tube is connected to the second coupling.

The cooling apparatus provided in this embodiment of the present application has at least the following beneficial effects: By adopting the connector according to any one of the above embodiments, reliability of the cooling apparatus is effectively enhanced.

An embodiment of the present application further provides a battery, including the cooling apparatus described above.

The battery provided in this embodiment of the present application has at least the following beneficial effects: By adopting the cooling apparatus according to any one of the above embodiments, reliability of the battery is effectively enhanced.

An embodiment of the present application further provides an electric device, including the battery described above.

The electric device provided in this embodiment of the present application has at least the following beneficial effects: By adopting the battery according to any one of the above embodiments, reliability of the electric device is effectively enhanced.

### BRIEF DESCRIPTION OF DRAWINGS

To more clearly illustrate technical solutions in embodiments of the present application, drawings used in descriptions of the embodiments or prior art are briefly introduced below. Apparently, the drawings described below are merely some embodiments of the present application, and for those of ordinary skill in the art, other drawings may be obtained based on these drawings without creative effort.
FIG. 1 is a schematic structural diagram of a vehicle according to an embodiment of this application;
FIG. 2 is an exploded structural schematic diagram of a battery in the vehicle shown in FIG. 1;
FIG. 3 is a schematic structural diagram of a connector in the battery shown in FIG. 2;
FIG. 4 is a first cross-sectional structural schematic diagram along line A-A in FIG. 3;
FIG. 5 is a schematic structural diagram of a movable member and an identification portion in the connector shown in FIG. 3;
FIG. 6 is a schematic structural diagram of a first coupling and a shielding member in the connector shown in FIG. 3;
FIG. 7 is a cross-sectional structural schematic diagram along line B-B in FIG. 6;
FIG. 8 is a second cross-sectional structural schematic diagram along line A-A in FIG. 3; and
FIG. 9 is an enlarged schematic structural diagram at C in FIG. 8.

Reference signs in the drawings are as follows:
1000. vehicle;
100. battery;
10. cooling apparatus; 11. connector; 111. first coupling; 1111. coupling main body; 1112. first snap-fit member; 1113. second snap-fit member; 112. second coupling; 113. identification portion; 114. shielding member; 1141. slide groove; 11411. first groove wall; 11412. second groove wall; 11413. first accommodating cavity; 11414. second accommodating cavity; 1142. first pressing portion; 11421. first protruding portion; 11422. first inclined surface; 1143. third pressing portion; 11431. third protruding portion; 11432. third inclined surface; 1144. third elastic arm; 11441. third arm body; 11442. sixth pressing portion; 11443. fifth protruding portion; 11444. sixth inclined surface; 1145. fourth elastic arm; 11451. fourth arm body; 11452. seventh pressing portion; 11453. sixth protruding portion; 11454. eighth inclined surface; 1146. first limiting portion; 115. movable member; 1151. main body portion; 1152. first elastic arm; 11521. first arm body; 11522. second pressing portion; 11523. second protruding portion; 11524. second inclined surface; 1153. second elastic arm; 11531. second arm body; 11532. fourth pressing portion; 11533. fourth protruding portion; 11534. fourth inclined surface; 1154. fifth pressing portion; 11541. fifth inclined surface; 11542. seventh inclined surface; 1155. pulling end; 11551. gripping opening; 1156. second limiting portion; 12. first tube; 13. second tube;
20. box body; 21. first part; 22. second part;
30. battery cell;
200. controller; and
300. motor.

### DESCRIPTION OF EMBODIMENTS

To make technical problems, technical solutions, and beneficial effects of the present application clearer, the present application is further described in detail below in conjunction with drawings and embodiments. It should be understood that specific embodiments described herein are merely used to explain the present application and are not intended to limit the present application.

It should be noted that when an element is referred to as being "fixed to" or "disposed on" another element, the element may be directly on the other element or indirectly on the other element. When an element is referred to as being "connected to" another element, the element may be directly connected to the other element or indirectly connected to the other element.

It should be understood that terms such as "length," "width," "upper," "lower," "front," "rear," "left," "right," "vertical," "horizontal," "top," "bottom," "inner," and "outer" indicating orientation or positional relationships are based on orientations or positional relationships shown in the drawings, and are merely for convenience in describing the present application and simplifying the description, rather than indicating or implying that a referred device or element must have a specific orientation, be constructed, and operate in a specific orientation, and thus should not be construed as limiting the present application.

In addition, terms "first," "second," "third," "fourth," "fifth," "sixth," and "seventh" are used for descriptive purposes only and should not be construed as indicating or implying relative importance or implicitly indicating a number of indicated technical features. Thus, a feature defined by "first," "second," "third," "fourth," "fifth," "sixth," or "seventh" may explicitly or implicitly include one or more such features. In the description of the present application, "multiple" means two or at least two unless otherwise specifically stated.

A connector, as a connecting component, is configured to connect two components. For example, two tubes are connected via a connector; and for another example, two cables are connected via a connector. Specifically, a connector typically includes two couplings, one coupling is connected to one component, another coupling is connected to another component, and connection of the two components is achieved by connecting the two couplings. However, when connecting the two couplings, a situation where the two couplings are not properly connected easily occurs, resulting in an inability to effectively connect the two components.

In related art, to facilitate working personnel in determining whether two couplings of a connector are properly connected, an identification mark is typically provided on the connector. Under the condition that the two couplings are not properly connected, at least a portion of the identification mark is shielded, and working personnel, unable to observe a complete identification mark, are capable of determining that the two couplings are not properly connected. Under the condition that the two couplings are properly connected, the entire identification mark is exposed, and working personnel, observing the complete identification mark, are capable of determining that the two couplings are properly connected. However, during actual use, since working personnel determine whether the two couplings are properly connected through visual inspection, under the condition that the two couplings are not fully properly connected, a majority of the identification mark is already exposed, and working personnel easily misjudge that the two couplings are properly connected, resulting in low judgment accuracy.

To enhance accuracy of working personnel in determining whether two couplings are properly connected, a connector provided by an embodiment of the present application is provided with an identification portion and a shielding member, where the identification portion is capable of being identified by an external apparatus. Under the condition that the first coupling and the second coupling are not properly connected, the shielding member shields the identification portion, and the external apparatus is unable to identify the identification portion. Under the condition that the first coupling and the second coupling are properly connected, the identification portion is uncovered by the shielding member and exposed to an external environment of the connector, or the identification portion is capable of being exposed to the external environment of the connector via an identification window provided on the shielding member, and the external apparatus is capable of identifying the identification portion. In other words, when the external apparatus is unable to identify the identification portion, a determination is made that the first coupling and the second coupling are not properly connected; and when the external apparatus is capable of identifying the identification portion, a determination is made that the first coupling and the second coupling are properly connected. Thus, working personnel are capable of accurately determining whether the first coupling and the second coupling of the connector are properly connected.

The connector, cooling apparatus, battery, and electric device using the battery as a power source disclosed in embodiments of the present application are described, where the electric device may include but is not limited to a vehicle, a mobile phone, a portable device, a laptop computer, a ship, a spacecraft, an electric toy, and an electric tool. A vehicle may be a fuel vehicle, a gas vehicle, or a new energy vehicle, and a new energy vehicle may be a pure electric vehicle, a hybrid vehicle, or an extended-range vehicle, and the like. A spacecraft includes an airplane, a rocket, a space shuttle, a spaceship, and the like. An electric toy includes a stationary or mobile electric toy, such as a game console, an electric car toy, an electric ship toy, an electric airplane toy, and the like. An electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, an electric planer, and the like.

For convenience of description, the following embodiments take an electric device being a vehicle as an example for explanation.

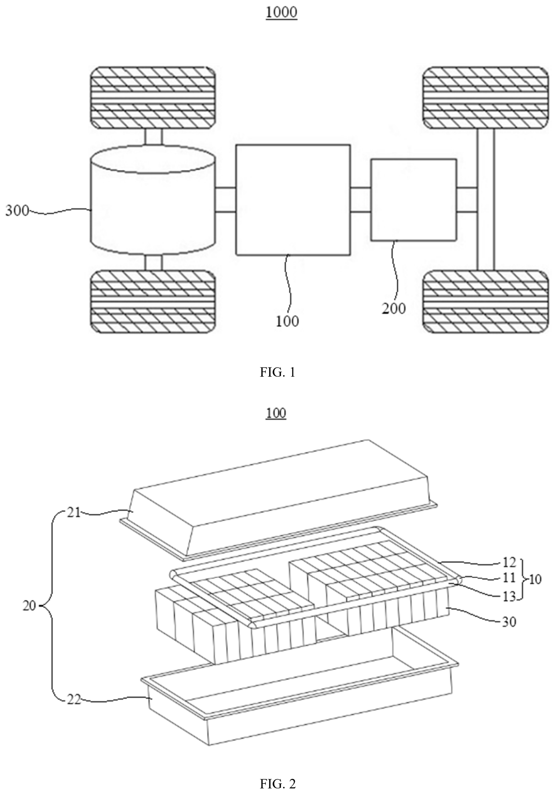

Referring to FIG. 1, FIG. 1 is a schematic structural diagram of a vehicle 1000 provided by an embodiment of the present application. The vehicle 1000 is provided with a battery 100 inside, and the battery 100 may be positioned at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, for operational power requirements during startup, navigation, and driving of the vehicle 1000.

In some embodiments of the present application, a battery 100 can be used not only as an operational power source for a vehicle 1000 but also as a driving power source for the vehicle 1000, replacing or partially replacing fossil fuel or natural gas to provide driving traction for the vehicle 1000.

Referring to FIG. 2, FIG. 2 is an exploded schematic diagram of a battery 100 provided by an embodiment of the present application. The battery 100 includes a cooling apparatus 10, a box body 20, and battery cells 30, where the battery cells 30 are accommodated within the box body 20. The box body 20 is configured to provide an accommodating space for the battery cells 30, and the box body 20 is capable of adopting various structures. In some embodiments, the box body 20 includes a first part 21 and a second part 22, the first part 21 and the second part 22 shield each other, and the first part 21 and the second part 22 jointly define an accommodating space for accommodating the battery cells 30. The second part 22 may be a hollow structure with an opening at one end, the first part 21 may be a plate-like structure, and the first part 21 shields an opening side of the second part 22, such that the first part 21 and the second part 22 jointly define the accommodating space; the first part 21 and the second part 22 are also capable of both being hollow structures with an opening on one side, where an opening side of the first part 21 shields an opening side of the second part 22. The box body 20 formed by the first part 21 and the second part 22 is capable of having various shapes, such as a cylinder, a cuboid, and the like.

In some embodiments, the box body 20 is capable of forming a part of a chassis structure of the vehicle 1000. For example, a portion of the box body 20 is capable of forming at least a part of a floor of the vehicle 1000, or a portion of the box body 20 is capable of forming at least a part of crossbeams and longitudinal beams of the vehicle 1000.

In some embodiments, the battery 100 may exclude the box body 20, and a plurality of battery cells 30 are electrically connected and assembled into the vehicle 1000 as a whole through necessary fixing structures.

In the battery 100, the battery cells 30 may be present in plurality, and the plurality of battery cells 30 are capable of being connected in series, parallel, or series-parallel, where being connected in series-parallel means a combination of series and parallel connections of the plurality of battery cells 30. The plurality of battery cells 30 may be directly connected in series, parallel, or series-parallel, and then an entirety of the plurality of battery cells 30 is accommodated in the box body 20. Certainly, the battery 100 may alternatively be formed by a plurality of battery cells 30 being connected in series, parallel, or series-parallel first to form a battery module, and then a plurality of battery modules being connected in series, parallel, or series-parallel to form an entirety which is accommodated in the box body 20. The battery 100 may further include other functional components. For example, the battery 100 may further include a busbar component configured to implement electrical connection between the plurality of battery cells 30.

Each battery cell 30 may be a secondary battery or a primary battery, where a secondary battery refers to a battery cell 30 that, after discharge, can be recharged to activate active materials for continued use, and a primary battery refers to a battery cell 30 that, after depletion of electrical energy, can be recharged to activate active materials for continued use. The battery cell 30 may alternatively be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, and the like, but is not limited thereto. The battery cell 30 may be a cylindrical battery cell, a prismatic battery cell, a pouch battery cell, or a battery cell of other shapes, where a prismatic battery cell includes a square-shell battery cell, a blade-shaped battery cell, a multi-prismatic battery cell, such as a hexagonal prismatic battery cell, and the like, with no particular limitation in the present application.

The cooling apparatus 10 is a device configured to cool the battery cells 30. The cooling apparatus 10 may be entirely disposed within the accommodating space of the box body 20 or partially disposed within the accommodating space of the box body 20. The cooling apparatus 10 includes a first tube 12, a second tube 13, and a connector 11, where the first tube 12 and the second tube 13 are connected through the connector 11 to form a flow path for circulation of a cooling medium. The cooling apparatus 10 may further include a power pump, where the power pump is configured to provide power for the cooling medium to flow in the flow path.

Technical solutions provided by the present application are described in detail below with reference to specific accompanying drawings and embodiments.

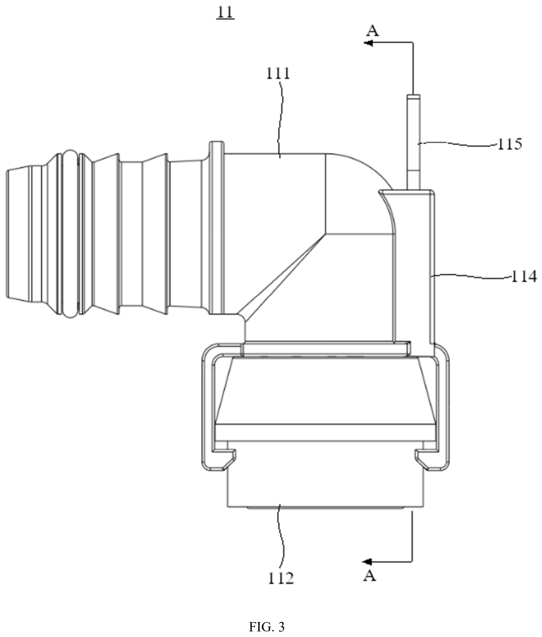

According to a first aspect, referring to FIG. 3 to FIG. 5 together, an embodiment of the present application provides a connector 11, including a first coupling 111, a second coupling 112, an identification portion 113, and a shielding member 114. The second coupling 112 is connected to the first coupling 111. The identification portion 113 is configured to be identified by an external apparatus. Under the condition that the first coupling 111 and the second coupling 112 are not properly connected, the shielding member 114 shields the identification portion 113; and under the condition that the first coupling 111 and the second coupling 112 are properly connected, the identification portion 113 is uncovered by the shielding member 114 and exposed to an external environment of the connector 11, or the identification portion 113 is capable of being exposed to the external environment of the connector 11 via an identification window provided on the shielding member 114.

The first coupling 111 is configured to be connected to one component, and the second coupling 112 is configured to be connected to another component. For example, the first coupling 111 is connected to a port of the first tube 12, and the second coupling 112 is connected to a port of the second tube 13. Specifically, the first coupling 111 includes a first connection end and a second connection end, the first connection end is connected to the port of the first tube 12, the second coupling 112 includes a third connection end and a fourth connection end, the third connection end is connected to the port of the first tube 12, and the second connection end is connected to the fourth connection end. A connection manner between the second connection end and the fourth connection end may be but is not limited to snap-fit connection, threaded connection, plug-in connection, and the like, with no specific limitation herein. In some embodiments, the connector 11 may further include a sealing member, where the sealing member is disposed between the second connection end and the fourth connection end to seal a gap between the second connection end and the fourth connection end.

Proper connection of the first coupling 111 and the second coupling 112 refers to a state where the first coupling 111 is connected to the second coupling 112 until a specific part of the first coupling 111 is fitted with a specific part of the second coupling 112. For example, the first coupling 111 includes a first end face, the second coupling 112 includes a second end face, and during connection of the first coupling 111 and the second coupling 112, when the first end face of the first coupling 111 is attached to the second end face of the second coupling 112, the first coupling 111 and the second coupling 112 are properly connected; otherwise, the first coupling 111 and the second coupling 112 are not properly connected. For another example, the first coupling 111 includes a groove, the second coupling 112 includes a flange, and during connection of the first coupling 111 and the second coupling 112, when the flange of the second coupling 112 is snapped into the groove of the first coupling 111, the first coupling 111 and the second coupling 112 are properly connected; otherwise, the first coupling 111 and the second coupling 112 are not properly connected.

The identification portion 113 is configured to be identified by an external apparatus. The identification portion 113 may be disposed on the first coupling 111, on the second coupling 112, or on another carrier. In some embodiments, the identification portion 113 may be a digital identifier containing product information of the connector 11, such as a QR code, a barcode, or a three-dimensional code. It can be understood that under the condition that the identification portion 113 is a QR code, the external apparatus is a QR code reader; under the condition that the identification portion 113 is a barcode, the external apparatus is a barcode reader; and under the condition that the identification portion 113 is a three-dimensional code, the external apparatus is a three-dimensional code reader. In other embodiments, the identification portion 113 may alternatively be a specific graphic identifier or an identifier combining graphics and colors, such as a red circular identifier or a green square identifier. It can be understood that under the condition that the identification portion 113 is a graphic identifier or an identifier combining graphics and colors, the external apparatus may be a CCD (charge coupled device, charge coupled device) camera.

The shielding member 114 is a component configured to shield the identification portion 113. The shielding member 114 may be disposed on the first coupling 111, on the second coupling 112, or on another carrier. In some embodiments, the shielding member 114 may be a hollow structural component, and the identification portion 113 is disposed inside the shielding member 114, such that the shielding member 114 shields the identification portion 113. In other embodiments, the shielding member 114 may be a solid component, and the shielding member 114 covers the identification portion 113, such that the shielding member 114 shields the identification portion 113. It can be understood that to enable the identification portion 113 to be exposed to the external environment of the connector 11, the identification portion 113 and the shielding member 114 may move relative to each other. For example, the shielding member 114 remains stationary while the identification portion 113 may move relative to the shielding member 114, or the identification portion 113 remains stationary while the shielding member 114 may move relative to the identification portion 113.

In some embodiments, the identification portion 113 may be completely uncovered by the shielding member 114, such that the identification portion 113 is exposed to the external environment of the connector 11. For example, under the condition that the first coupling 111 and the second coupling 112 are properly connected, an entirety of the identification portion 113 is outside a shielding range of the shielding member 114, such that the identification portion 113 is exposed to the external environment of the connector 11. For another example, under the condition that the first coupling 111 and the second coupling 112 are not properly connected, working personnel are unable to remove the identification portion 113; and under the condition that the first coupling 111 and the second coupling 112 are properly connected, working personnel are capable of removing the identification portion 113 to outside the shielding range of the shielding member 114, such that the identification portion 113 is exposed to the external environment of the connector 11.

In other embodiments, the shielding member 114 is provided with an identification window; under the condition that the first coupling 111 and the second coupling 112 are not properly connected, at least a portion of the identification portion 113 is within a shielding range of the shielding member 114; and under the condition that the first coupling 111 and the second coupling 112 are properly connected, an entirety of the identification portion 113 is within a coverage range of the identification window, such that the identification portion 113 is exposed to the external environment of the connector 11.

The connector 11 provided in the embodiments of the present application includes an identification portion 113 and a shielding member 114, where the identification portion 113 is capable of being identified by an external apparatus. Under the condition that the first coupling 111 and the second coupling 112 are not properly connected, the shielding member 114 shields the identification portion 113, and the external apparatus is unable to identify the identification portion 113; and under the condition that the first coupling 111 and the second coupling 112 are properly connected, the identification portion 113 is uncovered by the shielding member 114 and exposed to the external environment of the connector 11, or the identification portion 113 is capable of being exposed to the external environment of the connector 11 via the identification window provided on the shielding member 114, and the external apparatus is capable of identifying the identification portion 113. In other words, when the external apparatus is unable to identify the identification portion 113, a determination is made that the first coupling 111 and the second coupling 112 are not properly connected; when the external apparatus is capable of identifying the identification portion 113, a determination is made that the first coupling 111 and the second coupling 112 are properly connected. Thus, working personnel are capable of accurately determining whether the first coupling 111 and the second coupling 112 of the connector 11 are properly connected, enabling working personnel to promptly rework the connector 11 in cases where the first coupling 111 and the second coupling 112 are not properly connected, thereby reducing a risk of leakage in the connector 11.

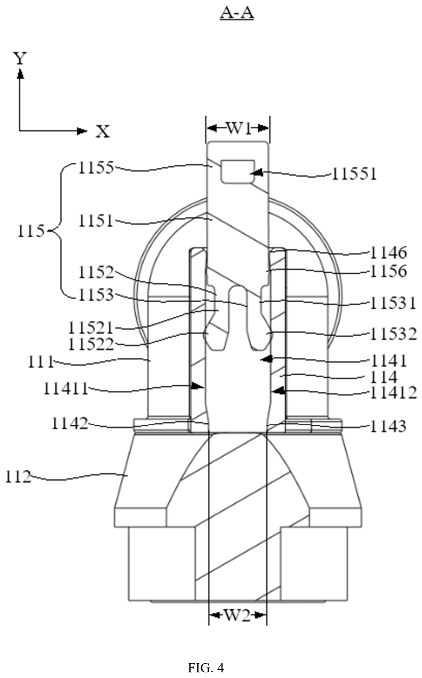

In some embodiments of the present application, referring to FIG. 3 to FIG. 5 together, the connector 11 further includes a movable member 115, the identification portion 113 is disposed on the movable member 115, and under the condition that the first coupling 111 and the second coupling 112 are properly connected, the second coupling 112 pushes the movable member 115 to move along a first direction, such that the identification portion 113 is uncovered by the shielding member 114 and exposed to the external environment of the connector 11, or the identification portion 113 is capable of being exposed to the external environment of the connector 11 via the identification window, where the first direction is a direction from the second coupling 112 toward the first coupling 111, as shown by a Y direction in FIG. 4.

The movable member 115, as a carrier of the identification portion 113, is capable of moving relative to the shielding member 114. In other words, in the embodiments, the shielding member 114 remains stationary, and the identification portion 113 is disposed on the movable member 115 and moves with the movable member 115 to achieve relative movement between the identification portion 113 and the shielding member 114. Optionally, the movable member 115 may be but is not limited to a plate-like member or a columnar member, with no specific limitation herein. The movable member 115 may be made of metal, plastic, glass, wood, and the like, with no specific limitation herein.

During connection of the second coupling 112 to the first coupling 111, the second coupling 112 pushes the movable member 115 to move along the first direction. In some embodiments, during connection of the second coupling 112 to the first coupling 111, the second coupling 112 maintains continuous contact with the movable member 115; when the first coupling 111 and the second coupling 112 are properly connected, the second coupling 112 pushes the movable member 115 to move to a preset position along the first direction, such that the identification portion 113 is uncovered by the shielding member 114 and exposed to the external environment of the connector 11, or the identification portion 113 is capable of being exposed to the external environment of the connector 11 via the identification window. In other embodiments, during connection of the second coupling 112 to the first coupling 111, the second coupling 112 pushes the movable member 115 to provide an initial driving force for the movable member 115 to move along the first direction, and the movable member 115 is capable of moving along the first direction; and when the first coupling 111 and the second coupling 112 are properly connected, a secondary driving force for the movable member 115 to move along the first direction is provided by another drive structure, such that the movable member 115 continues to move to the preset position along the first direction, thereby enabling the identification portion 113 to be uncovered by the shielding member 114 and exposed to the external environment of the connector 11, or enabling the identification portion 113 to be exposed to the external environment of the connector 11 via the identification window.

By adopting the above technical solution, under the condition that the first coupling 111 and the second coupling 112 are properly connected, the second coupling 112 pushes the movable member 115 to move along the first direction, and the movable member 115 moves to a preset position along the first direction, such that the identification portion 113 is uncovered by the shielding member 114 and exposed to the external environment of the connector 11, or the identification portion 113 is capable of being exposed to the external environment of the connector 11 via the identification window, facilitating recognition of the identification portion 113 by the external apparatus.

In some embodiments of the present application, referring to FIG. 4, the connector 11 includes a slide groove 1141 extending along the first direction, and the movable member 115 is slidably disposed within the slide groove 1141.

The slide groove 1141 is configured to define a movement path of the movable member 115. The slide groove 1141 may be disposed on the shielding member 114; and under the condition that the shielding member 114 is disposed on the first coupling 111, the slide groove 1141 may alternatively be disposed on the first coupling 111 or between the shielding member 114 and the first coupling 111.

The movable member 115 being slidably disposed within the slide groove 1141 refers to the movable member 115 being disposed within the slide groove 1141 and capable of moving along the first direction within the slide groove 1141.

By adopting the above technical solution, a movement direction of the movable member 115 is effectively restricted, thereby effectively enhancing stability of movement of the movable member 115.

In some embodiments of the present application, referring to FIG. 3 to FIG. 7 together, a drive structure is provided between a groove wall of the slide groove 1141 and the movable member 115. Under the condition that the first coupling 111 and the second coupling 112 are properly connected, the second coupling 112 pushes the movable member 115 to trigger the drive structure, and the drive structure provides a driving force for the movable member 115 to move along the first direction, such that the identification portion 113 is uncovered by the shielding member 114 and exposed to the external environment of the connector 11, or the identification portion 113 is capable of being exposed to the external environment of the connector 11 via the identification window.

The drive structure is configured to provide a secondary driving force for the movable member 115 to move along the first direction. In other words, in the embodiments, during connection of the second coupling 112 to the first coupling 111, the second coupling 112 pushes the movable member 115 to provide an initial driving force for the movable member 115 to move along the first direction; when the first coupling 111 and the second coupling 112 are properly connected, the movable member 115 moves to a trigger position of the drive structure, and after the drive structure is triggered, the drive structure provides the secondary driving force for the movable member 115 to move along the first direction, such that the movable member 115 continues to move to the preset position along the first direction, thereby enabling the identification portion 113 to be uncovered by the shielding member 114 and exposed to the external environment of the connector 11, or enabling the identification portion 113 to be exposed to the external environment of the connector 11 via the identification window.

In some embodiments, the drive structure is an elastic structure, where after the drive structure is triggered, an elastic force acting on the movable member 115 is generated to drive the movable member 115 to continue moving along the first direction.

In some other embodiments, the drive structure is a magnetic structure, where after the drive structure is triggered, a magnetic force acting on the movable member 115 is generated to drive the movable member 115 to continue moving along the first direction.

In yet other embodiments, the drive structure is an electric drive structure, where after the drive structure is triggered and energized, a driving force acting on the movable member 115 is generated to drive the movable member 115 to continue moving along the first direction.

By adopting the above technical solution, under the condition that the first coupling 111 and the second coupling 112 are properly connected, the second coupling 112 pushes the movable member 115 to trigger the drive structure; under a driving action of the drive structure, the movable member 115 is capable of moving along the first direction; and when the drive structure is triggered, working personnel may preliminarily determine that the first coupling 111 and the second coupling 112 are properly connected; and under the condition that the movable member 115 moves to the preset position along the first direction, the identification portion 113 is uncovered by the shielding member 114 and exposed to the external environment of the connector 11, or the identification portion 113 is capable of being exposed to the external environment of the connector 11 via the identification window, and the external apparatus may identify the identification portion 113, enabling working personnel to further confirm that the first coupling 111 and the second coupling 112 are properly connected, thereby further enhancing accuracy of working personnel in determining whether the first coupling 111 and the second coupling 112 are properly connected.

In some embodiments of the present application, referring to FIG. 4 to FIG. 7 together, the slide groove 1141 includes a first groove wall 11411, a first pressing portion 1142 is protrudingly provided on the first groove wall 11411, the movable member 115 includes a main body portion 1151 and a first elastic arm 1152, the identification portion 113 is disposed on the main body portion 1151, the first elastic arm 1152 is disposed at an end of the main body portion 1151 proximate to the second coupling 112, and the first elastic arm 1152 elastically presses against the first pressing portion 1142 to form the drive structure.

The first groove wall 11411 may be any groove wall of the slide groove 1141, such as a left-side wall, a right-side wall, a bottom wall, or a top wall of the slide groove 1141, with no specific limitation herein.

The first pressing portion 1142 is the part configured to elastically press against the first elastic arm 1152, and the first pressing portion 1142 protrudes from a wall surface of the first groove wall 11411 toward a direction approaching the movable member 115 (for example, an X direction shown in FIG. 4).

The main body portion 1151 is a main body part of the movable member 115, configured to provide a connection space for the first elastic arm 1152 and other parts of the movable member 115.

The first elastic arm 1152 is the part capable of undergoing elastic deformation and generating an elastic force after elastically pressing against the first pressing portion 1142. One end of the first elastic arm 1152 is connected to an end of the main body portion 1151 proximate to the second coupling 112, and another end of the first elastic arm 1152 is configured to contact the second coupling 112. In other words, during connection of the second coupling 112 to the first coupling 111, the second coupling 112 pushes an end of the first elastic arm 1152 away from the main body portion 1151, such that the movable member 115 moves along the first direction.

In some embodiments, the main body portion 1151 and the first elastic arm 1152 are capable of being integrally formed. For example, the main body portion 1151 and the first elastic arm 1152 are integrally formed through an injection molding process. In other embodiments, the main body portion 1151 and the first elastic arm 1152 are capable of being separately connected. For example, the main body portion 1151 and the first elastic arm 1152 are connected through fasteners such as screws or rivets.

The first elastic arm 1152 elastically presses against the first pressing portion 1142 to form the drive structure. In other words, in the embodiments, the drive structure is an elastic structure, where the first elastic arm 1152 elastically presses against the first pressing portion 1142, causing the first elastic arm 1152 to undergo elastic deformation and generate an elastic force.

By adopting the above technical solution, under the condition that the first coupling 111 and the second coupling 112 are properly connected, the first elastic arm 1152 elastically presses against the first pressing portion 1142, causing the first elastic arm 1152 to undergo elastic deformation and generate an elastic force; under a combined action of the elastic force and a pushing inertia of the second coupling 112, the first elastic arm 1152 separates from the first pressing portion 1142, thereby driving the movable member 115 to move to a preset position along the first direction, such that the identification portion 113 is uncovered by the shielding member 114 and exposed to the external environment of the connector 11, or the identification portion 113 is capable of being exposed to the external environment of the connector 11 via the identification window.

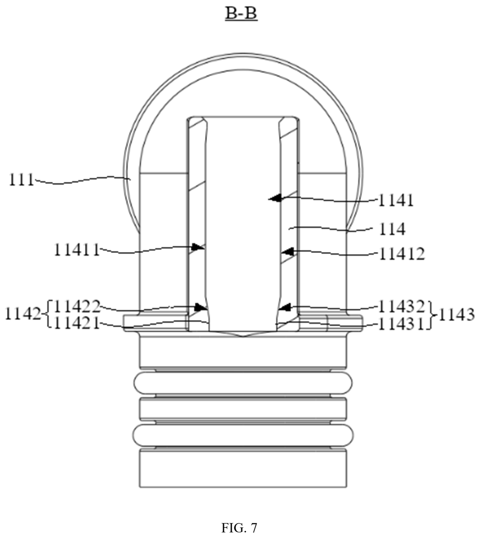

In some embodiments of the present application, referring to FIG. 4 and FIG. 7 together, the first pressing portion 1142 includes a first protruding portion 11421 and a first inclined surface 11422. The first protruding portion 11421 is protrudingly provided on the first groove wall 11411, the first inclined surface 11422 is located on a side of the first protruding portion 11421 facing away from the second coupling 112 and connects between the first groove wall 11411 and an end of the first protruding portion 11421 facing away from the first groove wall 11411, and the first protruding portion 11421 and the first inclined surface 11422 sequentially elastically press against the first elastic arm 1152 along the first direction.

The first protruding portion 11421 is a main body part of the first pressing portion 1142, and the first protruding portion 11421 protrudes from a wall surface of the first groove wall 11411 toward a direction approaching the movable member 115 (for example, an X direction shown in FIG. 4).

The first inclined surface 11422 is the part of the first pressing portion 1142 configured to connect the wall surface of the first groove wall 11411 to an end of the first protruding portion 11421 facing away from the first groove wall 11411. The first inclined surface 11422 is located on a side of the first protruding portion 11421 facing away from the second coupling 112. In other words, the first protruding portion 11421 and the first inclined surface 11422 are sequentially arranged along the first direction (for example, a Y direction shown in FIG. 4), such that during movement of the first elastic arm 1152 along the first direction, the first elastic arm 1152 first presses against the first protruding portion 11421 and then presses against the first inclined surface 11422.

By adopting the above technical solution, under the condition that the first coupling 111 and the second coupling 112 are properly connected, the first elastic arm 1152 first elastically presses against the first protruding portion 11421, causing the first elastic arm 1152 to undergo elastic deformation and generate an elastic force; and under a combined action of the elastic force and a pushing inertia of the second coupling 112, the first elastic arm 1152 separates from the first protruding portion 11421 and elastically presses against the first inclined surface 11422, and subsequently the first elastic arm 1152 gradually returns to its original position along an inclination direction of the first inclined surface 11422. This enables the drive structure to continuously provide a driving force for the movable member 115 to move along the first direction until the first elastic arm 1152 separates from the first inclined surface 11422, thereby driving the movable member 115 to move to the preset position along the first direction, such that the identification portion 113 is uncovered by the shielding member 114 and exposed to the external environment of the connector 11, or the identification portion 113 is capable of being exposed to the external environment of the connector 11 via the identification window.

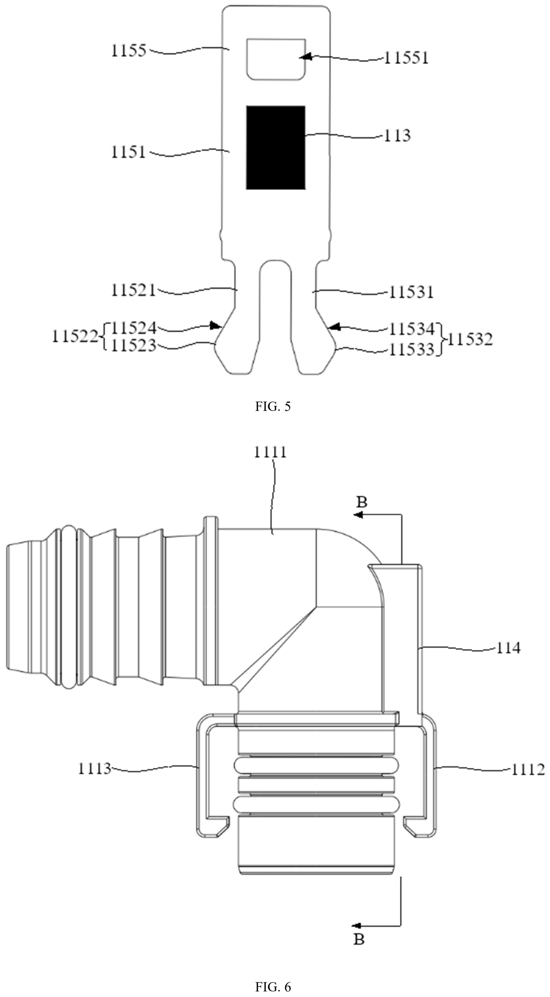

In some embodiments of the present application, referring to FIG. 4 and FIG. 5 together, the first elastic arm 1152 includes a first arm body 11521 disposed on the main body portion 1151 and a second pressing portion 11522 protrudingly provided on the first arm body 11521, and the second pressing portion 11522 presses against the first pressing portion 1142.

The first arm body 11521 is a main body part of the first elastic arm 1152, one end of the first arm body 11521 is connected to an end of the main body portion 1151 proximate to the second coupling 112, and another end of the first arm body 11521 is configured to contact the second coupling 112.

The second pressing portion 11522 is the part of the first elastic arm 1152 configured to press against the first pressing portion 1142. Under the condition that the second pressing portion 11522 presses against the first pressing portion 1142, the first arm body 11521 undergoes elastic deformation and generates an elastic force.

By adopting the above technical solution, an elastic deformation amplitude of the first elastic arm 1152 is effectively increased, thereby effectively enhancing a driving force provided by the drive structure to the movable member 115, ensuring that the movable member 115 is capable of moving to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 5, the second pressing portion 11522 includes a second protruding portion 11523 and a second inclined surface 11524. The second protruding portion 11523 is protrudingly provided on the first arm body 11521, and the second inclined surface 11524 is located on a side of the second protruding portion 11523 facing away from the second coupling 112 and connects between the first arm body 11521 and an end of the second protruding portion 11523 facing away from the first arm body 11521.

The second protruding portion 11523 is a main body part of the second pressing portion 11522, and the second protruding portion 11523 protrudes from the first arm body 11521 toward a direction approaching the first groove wall 11411.

The second inclined surface 11524 is the part of the second pressing portion 11522 configured to connect the first arm body 11521 to an end of the second protruding portion 11523 facing away from the first arm body 11521. The second inclined surface 11524 is located on a side of the second protruding portion 11523 facing away from the second coupling 112. In other words, the second protruding portion 11523 and the second inclined surface 11524 are sequentially arranged along the first direction (for example, a Y direction shown in FIG. 4); during movement of the movable member 115 along the first direction, the first pressing portion 1142 first presses against the second inclined surface 11524 and then presses against the second protruding portion 11523.

By adopting the above technical solution, under a pushing action of the second coupling 112, the first pressing portion 1142 first presses against the second inclined surface 11524, causing the first elastic arm 1152 to gradually undergo elastic deformation along an inclination direction of the second inclined surface 11524 until the second protruding portion 11523 presses against the first pressing portion 1142, thereby achieving pressing of the second protruding portion 11523 against the first pressing portion 1142, effectively enhancing smoothness of movement of the movable member 115 along the first direction.

In some embodiments of the present application, referring to FIG. 4 to FIG. 7 together, the slide groove 1141 includes a second groove wall 11412 disposed opposite to the first groove wall 11411, a third pressing portion 1143 is protrudingly provided on the second groove wall 11412, the movable member 115 further includes a second elastic arm 1153, the second elastic arm 1153 is disposed opposite to the first elastic arm 1152 and at an end of the main body portion 1151 proximate to the second coupling 112, the first elastic arm 1152 elastically presses against the first pressing portion 1142, and the second elastic arm 1153 elastically presses against the third pressing portion 1143 to form the drive structure.

The second groove wall 11412 is disposed opposite to the first groove wall 11411. In other words, under the condition that the first groove wall 11411 is a left-side wall of the slide groove 1141, the second groove wall 11412 is a right-side wall of the slide groove 1141; and under the condition that the first groove wall 11411 is a bottom wall of the slide groove 1141, the second groove wall 11412 is a top wall of the slide groove 1141.

The third pressing portion 1143 is the part configured to elastically press against the second elastic arm 1153, and the third pressing portion 1143 protrudes from a wall surface of the second groove wall 11412 toward a direction approaching the movable member 115.

The second elastic arm 1153 is the part capable of undergoing elastic deformation and generating an elastic force after elastically pressing against the third pressing portion 1143. One end of the second elastic arm 1153 is connected to an end of the main body portion 1151 proximate to the second coupling 112, and another end of the second elastic arm 1153 may or may not be configured to contact the second coupling 112. In other words, during connection of the second coupling 112 to the first coupling 111, the second coupling 112 may push only an end of the first elastic arm 1152 away from the main body portion 1151 to move the movable member 115 along the first direction, or the second coupling 112 may alternatively simultaneously push an end of the first elastic arm 1152 away from the main body portion 1151 and an end of the second elastic arm 1153 away from the main body portion 1151 to move the movable member 115 along the first direction.

In some embodiments, the main body portion 1151, the first elastic arm 1152, and the second elastic arm 1153 may be integrally formed. For example, the main body portion 1151, the first elastic arm 1152, and the second elastic arm 1153 are integrally formed through an injection molding process. In other embodiments, the main body portion 1151, the first elastic arm 1152, and the second elastic arm 1153 may be separately connected. For example, the first elastic arm 1152 and the second elastic arm 1153 are connected to the main body portion 1151 through fasteners such as screws or rivets.

The first elastic arm 1152 elastically presses against the first pressing portion 1142, and the second elastic arm 1153 elastically presses against the third pressing portion 1143 to form the drive structure. In other words, in the embodiments, the drive structure is an elastic structure, where the first elastic arm 1152 elastically presses against the first pressing portion 1142, causing the first elastic arm 1152 to undergo elastic deformation and generate an elastic force, and the second elastic arm 1153 elastically presses against the third pressing portion 1143, causing the second elastic arm 1153 to undergo elastic deformation and generate an elastic force, with the two elastic forces combined to act on the movable member 115, such that the movable member 115 moves along the first direction.

By adopting the above technical solution, forces on opposite sides of the movable member 115 are more balanced, effectively reducing a tilt amplitude of the movable member 115 relative to the first direction, thereby effectively enhancing smoothness of movement of the movable member 115 and effectively increasing a driving force provided by the drive structure to the movable member 115, ensuring that the movable member 115 is capable of moving to the preset position along the first direction.

In some embodiments of the present application, referring to FIG. 4 and FIG. 7 together, the third pressing portion 1143 includes a third protruding portion 11431 and a third inclined surface 11432, the third protruding portion 11431 is protrudingly provided on the second groove wall 11412, the third inclined surface 11432 is located on a side of the third protruding portion 11431 facing away from the second coupling 112 and connects between the second groove wall 11412 and an end of the third protruding portion 11431 facing away from the second groove wall 11412, and the third protruding portion 11431 and the third inclined surface 11432 sequentially elastically press against the second elastic arm 1153 along the first direction.

The third protruding portion 11431 is a main body part of the third pressing portion 1143, and the third protruding portion 11431 protrudes from a wall surface of the second groove wall 11412 toward a direction approaching the movable member 115.

The third inclined surface 11432 is the part of the third pressing portion 1143 configured to connect the wall surface of the second groove wall 11412 to an end of the third protruding portion 11431 facing away from the second groove wall 11412. The third inclined surface 11432 is located on a side of the third protruding portion 11431 facing away from the second coupling 112. In other words, the third protruding portion 11431 and the third inclined surface 11432 are sequentially arranged along the first direction (for example, a Y direction shown in FIG. 4), such that during movement of the second elastic arm 1153 along the first direction, the second elastic arm 1153 first presses against the third protruding portion 11431 and then presses against the third inclined surface 11432.

By adopting the above technical solution, under the condition that the first coupling 111 and the second coupling 112 are properly connected, the second elastic arm 1153 first elastically presses against the third protruding portion 11431, causing the second elastic arm 1153 to undergo elastic deformation and generate an elastic force; and under a combined action of the elastic force and a pushing inertia of the second coupling 112, the second elastic arm 1153 separates from the third protruding portion 11431 and elastically presses against the third inclined surface 11432, and subsequently the second elastic arm 1153 gradually returns to its original position along an inclination direction of the third inclined surface 11432. This enables the drive structure to continuously provide a driving force for the movable member 115 to move along the first direction until the second elastic arm 1153 separates from the third inclined surface 11432, thereby driving the movable member 115 to move to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 4 and FIG. 5 together, the second elastic arm 1153 includes a second arm body 11531 disposed on the main body portion 1151 and a fourth pressing portion 11532 protrudingly provided on the second arm body 11531, and the fourth pressing portion 11532 presses against the third pressing portion 1143.

The second arm body 11531 is a main body part of the second elastic arm 1153, one end of the second arm body 11531 is connected to an end of the main body portion 1151 proximate to the second coupling 112, and another end of the second arm body 11531 may or may not be configured to contact the second coupling 112.

The fourth pressing portion 11532 is the part of the second elastic arm 1153 configured to press against the third pressing portion 1143. Under the condition that the fourth pressing portion 11532 presses against the third pressing portion 1143, the second arm body 11531 undergoes elastic deformation and generates an elastic force.

By adopting the above technical solution, an elastic deformation amplitude of the second elastic arm 1153 is effectively increased, thereby effectively enhancing a driving force provided by the drive structure to the movable member 115, ensuring that the movable member 115 is capable of moving to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 5, the fourth pressing portion 11532 includes a fourth protruding portion 11533 and a fourth inclined surface 11534, the fourth protruding portion 11533 is protrudingly provided on the second arm body 11531, and the fourth inclined surface 11534 is located on a side of the fourth protruding portion 11533 facing away from the second coupling 112 and connects between the second arm body 11531 and an end of the fourth protruding portion 11533 facing away from the second arm body 11531.

The fourth protruding portion 11533 is a main body part of the fourth pressing portion 11532, and the fourth protruding portion 11533 protrudes from the second arm body 11531 toward a direction approaching the second groove wall 11412.

The fourth inclined surface 11534 is the part of the fourth pressing portion 11532 configured to connect the second arm body 11531 to an end of the fourth protruding portion 11533 facing away from the second arm body 11531. The fourth inclined surface 11534 is located on a side of the fourth protruding portion 11533 facing away from the second coupling 112. In other words, the fourth protruding portion 11533 and the fourth inclined surface 11534 are sequentially arranged along the first direction (for example, a Y direction shown in FIG. 4), such that during movement of the movable member 115 along the first direction, the third pressing portion 1143 first presses against the fourth inclined surface 11534 and then presses against the fourth protruding portion 11533.

By adopting the above technical solution, under a pushing action of the second coupling 112, the third pressing portion 1143 first presses against the fourth inclined surface 11534, causing the second elastic arm 1153 to gradually undergo elastic deformation along an inclination direction of the fourth inclined surface 11534 until the fourth protruding portion 11533 presses against the third pressing portion 1143, thereby achieving pressing of the fourth protruding portion 11533 against the third pressing portion 1143, effectively enhancing smoothness of movement of the movable member 115 along the first direction.

In some embodiments of the present application, referring to FIG. 4, the first elastic arm 1152 is capable of pressing against the first groove wall 11411 after separating from the first pressing portion 1142.

After the first elastic arm 1152 separates from the first pressing portion 1142, the first elastic arm 1152 presses against the first groove wall 11411. In other words, after the first elastic arm 1152 separates from the first pressing portion 1142, a frictional force is generated between the first elastic arm 1152 and the first groove wall 11411. It can be understood that under the condition that the first elastic arm 1152 includes a first arm body 11521 and a second pressing portion 11522, the second pressing portion 11522 presses against the first groove wall 11411, such that the frictional force is generated between the first elastic arm 1152 and the first groove wall 11411. The frictional force is greater than a gravitational force of the movable member 115, such that when the movable member 115 reaches a preset position, the movable member 115 remains stationary at the preset position.

In some embodiments of the present application, referring to FIG. 4, the second elastic arm 1153 is capable of pressing against the second groove wall 11412 after separating from the third pressing portion 1143.

After the second elastic arm 1153 separates from the third pressing portion 1143, the second elastic arm 1153 presses against the second groove wall 11412. In other words, after the second elastic arm 1153 separates from the third pressing portion 1143, a frictional force is generated between the second elastic arm 1153 and the second groove wall 11412. It can be understood that under the condition that the second elastic arm 1153 includes a second arm body 11531 and a fourth pressing portion 11532, the fourth pressing portion 11532 presses against the second groove wall 11412, such that the frictional force is generated between the second elastic arm 1153 and the second groove wall 11412. The frictional force is greater than a gravitational force of the movable member 115, such that when the movable member 115 reaches a preset position, the movable member 115 remains stationary at the preset position.

In some embodiments of the present application, referring to FIG. 4, the first elastic arm 1152 is capable of pressing against the first groove wall 11411 after separating from the first pressing portion 1142, and the second elastic arm 1153 is capable of pressing against the second groove wall 11412 after separating from the third pressing portion 1143.

After the first elastic arm 1152 separates from the first pressing portion 1142, the first elastic arm 1152 presses against the first groove wall 11411. In other words, after the first elastic arm 1152 separates from the first pressing portion 1142, a frictional force is generated between the first elastic arm 1152 and the first groove wall 11411. Similarly, after the second elastic arm 1153 separates from the third pressing portion 1143, the second elastic arm 1153 presses against the second groove wall 11412. In other words, after the second elastic arm 1153 separates from the third pressing portion 1143, a frictional force is generated between the second elastic arm 1153 and the second groove wall 11412. A sum of the frictional force between the first elastic arm 1152 and the first groove wall 11411 and the frictional force between the second elastic arm 1153 and the second groove wall 11412 is greater than a gravitational force of the movable member 115, such that when the movable member 115 reaches a preset position, the movable member 115 remains stationary at the preset position.

By adopting the above technical solution, a frictional force is generated between a movable member 115 and a groove wall of a slide groove 1141, where the frictional force overcomes a gravitational force of the movable member 115 or other external forces acting on the movable member 115, enabling the movable member 115 to remain stationary at a preset position, thereby reducing a risk of an external apparatus failing to identify an identification portion 113 due to the movable member 115 deviating from the preset position, effectively enhancing reliability of a connector 11.

In some embodiments of the present application, referring to FIG. 4, a width W1 of a main body portion 1151 is greater than a distance W2 between a first pressing portion 1142 and a third pressing portion 1143.

It can be understood that the width W1 of the main body portion 1151 refers to a dimension of the main body portion 1151 along a second direction, and the distance W2 between the first pressing portion 1142 and the third pressing portion 1143 refers to a distance between the first pressing portion 1142 and the third pressing portion 1143 along the second direction, where the second direction is a direction perpendicular to a first direction, such as an X direction shown in FIG. 4.

By adopting the above technical solution, a risk of the movable member 115 separating from the slide groove 1141 via a port of the slide groove 1141 proximate to a second coupling 112 is reduced, thereby effectively enhancing reliability of the connector 11.

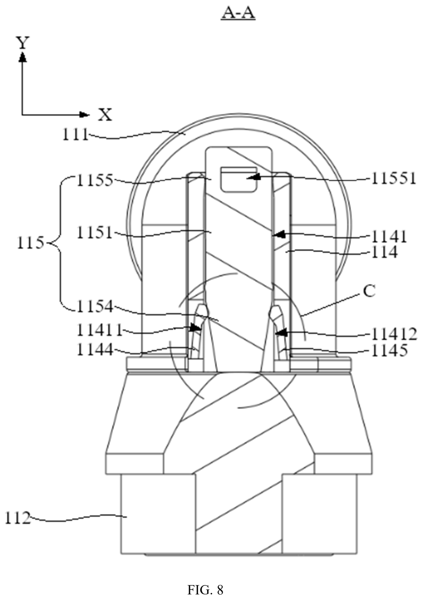

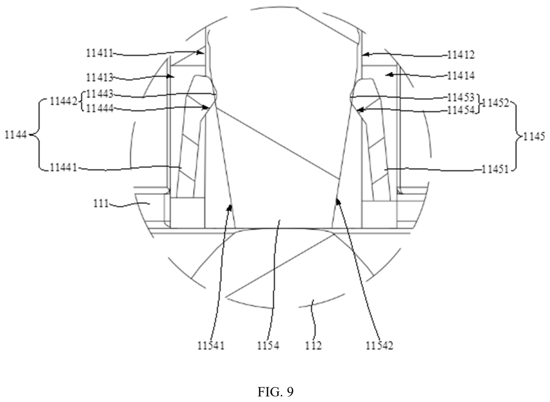

In some embodiments of the present application, referring to FIG. 8 and FIG. 9 together, the slide groove 1141 includes a first groove wall 11411, a third elastic arm 1144 is provided on the first groove wall 11411, the movable member 115 includes the main body portion 1151 and a fifth pressing portion 1154, the identification portion 113 is disposed on the main body portion 1151, the fifth pressing portion 1154 is disposed at an end of the main body portion 1151 proximate to the second coupling 112, and the third elastic arm 1144 elastically presses against the fifth pressing portion 1154 to form a drive structure.

The first groove wall 11411 may be any groove wall of the slide groove 1141, such as a left-side wall, a right-side wall, a bottom wall, or a top wall of the slide groove 1141, with no specific limitation herein.

The third elastic arm 1144 is a component capable of undergoing elastic deformation and generating an elastic force after elastically pressing against the fifth pressing portion 1154. One end of the third elastic arm 1144 is connected to the first groove wall 11411, and another end of the third elastic arm 1144 is configured to press against the fifth pressing portion 1154.

The main body portion 1151 is a main body part of the movable member 115, configured to provide a connection space for the fifth pressing portion 1154 and other parts of the movable member 115.

The fifth pressing portion 1154 is the part configured to elastically press against the third elastic arm 1144, one end of the fifth pressing portion 1154 is connected to the main body portion 1151, and another end of the fifth pressing portion 1154 is configured to contact the second coupling 112. In other words, during connection of the second coupling 112 to a first coupling 111, the second coupling 112 pushes an end of the fifth pressing portion 1154 away from the main body portion 1151, such that the movable member 115 moves along the first direction. During movement of the movable member 115 along the first direction, the third elastic arm 1144 may first press against the main body portion 1151 and then press against the fifth pressing portion 1154.

In some embodiments, the main body portion 1151 and the fifth pressing portion 1154 may be integrally formed. For example, the main body portion 1151 and the fifth pressing portion 1154 are integrally formed through an injection molding process. In other embodiments, the main body portion 1151 and the fifth pressing portion 1154 may be separately connected. For example, the main body portion 1151 and the fifth pressing portion 1154 are connected through fasteners such as screws or rivets.

The third elastic arm 1144 elastically presses against the fifth pressing portion 1154 to form the drive structure. In other words, in the embodiments, the drive structure is an elastic structure, where the third elastic arm 1144 elastically presses against the fifth pressing portion 1154, causing the third elastic arm 1144 to undergo elastic deformation and generate an elastic force.

By adopting the above technical solution, under the condition that the first coupling 111 and the second coupling 112 are properly connected, the third elastic arm 1144 elastically presses against the fifth pressing portion 1154, causing the third elastic arm 1144 to undergo elastic deformation and generate an elastic force; and under a combined action of the elastic force and a pushing inertia of the second coupling 112, the third elastic arm 1144 separates from the fifth pressing portion 1154, thereby driving the movable member 115 to move to a preset position along the first direction, such that the identification portion 113 is uncovered by the shielding member 114 and exposed to an external environment of the connector 11, or the identification portion 113 is capable of being exposed to the external environment of the connector 11 via an identification window.

In some embodiments of the present application, referring to FIG. 9, a fifth inclined surface 11541 is provided on a side of the fifth pressing portion 1154 facing the first groove wall 11411, the fifth inclined surface 11541 inclines from a side of the main body portion 1151 toward the first groove wall 11411 in a direction away from the first groove wall 11411, and the third elastic arm 1144 elastically presses against the fifth inclined surface 11541.

In other words, along the first direction, a width of the fifth pressing portion 1154 gradually increases, where a deformation amplitude of the third elastic arm 1144 is greatest when the third elastic arm 1144 presses against an end of the fifth pressing portion 1154 proximate to the main body portion 1151, and the deformation amplitude of the third elastic arm 1144 is smallest when the third elastic arm 1144 presses against an end of the fifth pressing portion 1154 proximate to the second coupling 112.

By adopting the above technical solution, under the condition that the first coupling 111 and the second coupling 112 are properly connected, the third elastic arm 1144 elastically presses against the fifth inclined surface 11541, causing the third elastic arm 1144 to gradually return to its original position along an inclination direction of the fifth inclined surface 11541. This enables the drive structure to continuously provide a driving force for the movable member 115 to move along the first direction until the third elastic arm 1144 separates from the fifth inclined surface 11541, thereby driving the movable member 115 to move to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 8 and FIG. 9 together, the third elastic arm 1144 includes a third arm body 11441 disposed on the first groove wall 11411 and a sixth pressing portion 11442 protrudingly provided on the third arm body 11441, and the sixth pressing portion 11442 presses against the fifth pressing portion 1154.

The third arm body 11441 is a main body part of the third elastic arm 1144, and one end of the third arm body 11441 is connected to the first groove wall 11411.

The sixth pressing portion 11442 is the part of the third elastic arm 1144 configured to press against the fifth pressing portion 1154. The sixth pressing portion 11442 is disposed at an end of the third arm body 11441 away from the first groove wall 11411, and under the condition that the sixth pressing portion 11442 presses against the fifth pressing portion 1154, the third arm body 11441 undergoes elastic deformation and generates an elastic force.

By adopting the above technical solution, an elastic deformation amplitude of the third elastic arm 1144 is effectively increased, thereby effectively enhancing a driving force provided by the drive structure to the movable member 115, ensuring that the movable member 115 is capable of moving to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 9, the sixth pressing portion 11442 includes a fifth protruding portion 11443 and a sixth inclined surface 11444, the fifth protruding portion 11443 is protrudingly provided on the third arm body 11441, and the sixth inclined surface 11444 is located on a side of the fifth protruding portion 11443 facing the second coupling 112 and connects between the third arm body 11441 and an end of the fifth protruding portion 11443 facing away from the third arm body 11441.

The fifth protruding portion 11443 is a main body part of the sixth pressing portion 11442, and the fifth protruding portion 11443 protrudes from the third arm body 11441 toward a direction approaching the movable member 115.

The sixth inclined surface 11444 is the part of the sixth pressing portion 11442 configured to connect the third arm body 11441 to an end of the fifth protruding portion 11443 facing away from the third arm body 11441. The sixth inclined surface 11444 is located on a side of the fifth protruding portion 11443 facing the second coupling 112. In other words, the sixth inclined surface 11444 and the fifth protruding portion 11443 are sequentially arranged along the first direction (for example, a Y direction shown in FIG. 4).

By adopting the above technical solution, during movement of the movable member 115 along the first direction, the main body portion 1151 first presses against the sixth inclined surface 11444, causing the third elastic arm 1144 to gradually undergo elastic deformation along an inclination direction of the sixth inclined surface 11444 until the fifth protruding portion 11443 presses against the main body portion 1151, and as the movable member 115 moves along the first direction, pressing of the fifth protruding portion 11443 against the fifth pressing portion 1154 is achieved, thereby effectively enhancing smoothness of movement of the movable member 115 along the first direction.

In some embodiments of the present application, referring to FIG. 9, the first groove wall 11411 is recessed to provide a first accommodating cavity 11413, and at least a portion of the third elastic arm 1144 is accommodated within the first accommodating cavity 11413.

The first accommodating cavity 11413 is configured to accommodate at least a portion of the third elastic arm 1144. For example, a portion of the third elastic arm 1144 connected to the first groove wall 11411 is accommodated within the first accommodating cavity 11413. It can be understood that a portion of the third elastic arm 1144 that presses against the fifth pressing portion 1154 extends outside the first accommodating cavity 11413. The first accommodating cavity 11413 may be a recess formed by a wall surface of the first groove wall 11411 recessed in a direction away from the movable member 115, or a through cavity that passes through the first groove wall 11411, with no specific limitation herein.

By adopting the above technical solution, a width of the slide groove 1141 is effectively reduced, thereby making a structure of the shielding member 114 more compact.

In some embodiments of the present application, referring to FIG. 8 and FIG. 9 together, the slide groove 1141 includes a second groove wall 11412 disposed opposite to the first groove wall 11411, a fourth elastic arm 1145 is provided on the second groove wall 11412, the third elastic arm 1144 elastically presses against the fifth pressing portion 1154, and the fourth elastic arm 1145 elastically presses against the fifth pressing portion 1154 to form the drive structure.

The second groove wall 11412 is disposed opposite to the first groove wall 11411. In other words, under the condition that the first groove wall 11411 is a left-side wall of the slide groove 1141, the second groove wall 11412 is a right-side wall of the slide groove 1141; and under the condition that the first groove wall 11411 is a bottom wall of the slide groove 1141, the second groove wall 11412 is a top wall of the slide groove 1141.

The fourth elastic arm 1145 is a component capable of undergoing elastic deformation and generating an elastic force after elastically pressing against the fifth pressing portion 1154. One end of the fourth elastic arm 1145 is connected to the second groove wall 11412, and another end of the fourth elastic arm 1145 is configured to press against the fifth pressing portion 1154.

The third elastic arm 1144 elastically presses against the fifth pressing portion 1154, and the fourth elastic arm 1145 elastically presses against the fifth pressing portion 1154 to form the drive structure. In other words, in the embodiments, the drive structure is an elastic structure, where the third elastic arm 1144 elastically presses against the fifth pressing portion 1154, causing the third elastic arm 1144 to undergo elastic deformation and generate an elastic force, and the fourth elastic arm 1145 elastically presses against the fifth pressing portion 1154, causing the fourth elastic arm 1145 to undergo elastic deformation and generate an elastic force, with the two elastic forces combined to act on the movable member 115, such that the movable member 115 moves along the first direction.

By adopting the above technical solution, forces on opposite sides of the movable member 115 are more balanced, effectively reducing a tilt amplitude of the movable member 115 relative to the first direction, thereby effectively enhancing smoothness of movement of the movable member 115 and effectively increasing a driving force provided by the drive structure to the movable member 115, ensuring that the movable member 115 is capable of moving to the preset position along the first direction.

In some embodiments of the present application, referring to FIG. 9, a seventh inclined surface 11542 is provided on a side of the fifth pressing portion 1154 facing the second groove wall 11412, the seventh inclined surface 11542 inclines from a side of the main body portion 1151 toward the second groove wall 11412 in a direction away from the second groove wall 11412, and the fourth elastic arm 1145 elastically presses against the seventh inclined surface 11542.

In other words, along the first direction, a width of the fifth pressing portion 1154 gradually increases, where a deformation amplitude of the fourth elastic arm 1145 is greatest when the fourth elastic arm 1145 presses against an end of the fifth pressing portion 1154 proximate to the main body portion 1151, and the deformation amplitude of the fourth elastic arm 1145 is smallest when the fourth elastic arm 1145 presses against an end of the fifth pressing portion 1154 proximate to the second coupling 112.

By adopting the above technical solution, under the condition that the first coupling 111 and the second coupling 112 are properly connected, the fourth elastic arm 1145 elastically presses against the seventh inclined surface 11542, causing the fourth elastic arm 1145 to gradually return to its original position along an inclination direction of the seventh inclined surface 11542. This enables the drive structure to continuously provide a driving force for the movable member 115 to move along the first direction until the fourth elastic arm 1145 separates from the seventh inclined surface 11542, thereby driving the movable member 115 to move to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 8 and FIG. 9 together, the fourth elastic arm 1145 includes a fourth arm body 11451 disposed on the second groove wall 11412 and a seventh pressing portion 11452 protrudingly provided on the fourth arm body 11451, and the seventh pressing portion 11452 presses against the fifth pressing portion 1154.

The fourth arm body 11451 is a main body part of the fourth elastic arm 1145, and one end of the fourth arm body 11451 is connected to the second groove wall 11412.

The seventh pressing portion 11452 is the part of the fourth elastic arm 1145 configured to press against the fifth pressing portion 1154. The seventh pressing portion 11452 is disposed at an end of the fourth arm body 11451 away from the second groove wall 11412, and under the condition that the seventh pressing portion 11452 presses against the fifth pressing portion 1154, the fourth arm body 11451 undergoes elastic deformation and generates an elastic force.

By adopting the above technical solution, an elastic deformation amplitude of the fourth elastic arm 1145 is effectively increased, thereby effectively enhancing a driving force provided by the drive structure to the movable member 115, ensuring that the movable member 115 is capable of moving to the preset position along the first direction, such that the identification portion 113 is uncovered by the shielding member 114 and exposed to the external environment of the connector 11, or the identification portion 113 is capable of being exposed to the external environment of the connector 11 via the identification window.

In some embodiments of the present application, referring to FIG. 9, the seventh pressing portion 11452 includes a sixth protruding portion 11453 and an eighth inclined surface 11454, the sixth protruding portion 11453 is protrudingly provided on the fourth arm body 11451, and the eighth inclined surface 11454 is located on a side of the sixth protruding portion 11453 facing the second coupling 112 and connects between the fourth arm body 11451 and an end of the sixth protruding portion 11453 facing away from the fourth arm body 11451.

The sixth protruding portion 11453 is a main body part of the seventh pressing portion 11452, and the sixth protruding portion 11453 protrudes from the fourth arm body 11451 toward a direction approaching the movable member 115.

The eighth inclined surface 11454 is the part of the seventh pressing portion 11452 configured to connect the fourth arm body 11451 to an end of the sixth protruding portion 11453 facing away from the fourth arm body 11451. The eighth inclined surface 11454 is located on a side of the sixth protruding portion 11453 facing the second coupling 112. In other words, the eighth inclined surface 11454 and the sixth protruding portion 11453 are sequentially arranged along the first direction (for example, a Y direction shown in FIG. 4).

By adopting the above technical solution, during movement of the movable member 115 along the first direction, the main body portion 1151 first presses against the eighth inclined surface 11454, causing the fourth elastic arm 1145 to gradually undergo elastic deformation along an inclination direction of the eighth inclined surface 11454 until the sixth protruding portion 11453 presses against the main body portion 1151, and as the movable member 115 moves along the first direction, pressing of the sixth protruding portion 11453 against the fifth pressing portion 1154 is achieved, thereby effectively enhancing smoothness of movement of the movable member 115 along the first direction.

In some embodiments of the present application, referring to FIG. 9, the second groove wall 11412 is recessed to provide a second accommodating cavity 11414, and at least a portion of the fourth elastic arm 1145 is accommodated within the second accommodating cavity 11414.

The second accommodating cavity 11414 is configured to accommodate at least a portion of the fourth elastic arm 1145. For example, a portion of the fourth elastic arm 1145 connected to the second groove wall 11412 is accommodated within the second accommodating cavity 11414. It can be understood that a portion of the fourth elastic arm 1145 that presses against the fifth pressing portion 1154 extends outside the second accommodating cavity 11414. The second accommodating cavity 11414 may be a recess formed by a wall surface of the second groove wall 11412 recessed in a direction away from the movable member 115, or a through cavity that passes through the second groove wall 11412, with no specific limitation herein.

By adopting the above technical solution, a width of the slide groove 1141 is effectively reduced, thereby making a structure of the shielding member 114 more compact.

In some embodiments of the present application, referring to FIG. 4, a limiting structure is provided between a groove wall of the slide groove 1141 and the movable member 115, and the limiting structure is configured to restrict a movement distance of the movable member 115 along the first direction.

For example, when the movable member 115 moves to the preset position along the first direction, the limiting structure is triggered to restrict further movement of the movable member 115 along the first direction, enabling the movable member 115 to remain stationary at the preset position.

By adopting the above technical solution, the movable member 115 is capable of moving to the preset position more accurately, thereby effectively enhancing reliability of the connector 11.

In some embodiments of the present application, referring to FIG. 4, the limiting structure includes a first limiting portion 1146 and a second limiting portion 1156, the first limiting portion 1146 is protrudingly provided on a groove wall of the slide groove 1141, the second limiting portion 1156 is protrudingly provided on the movable member 115, and the first limiting portion 1146 is configured to abut against the second limiting portion 1156.

It can be understood that the first limiting portion 1146 protrudes from a wall surface of the slide groove 1141 toward a direction approaching the movable member 115, and the second limiting portion 1156 protrudes from a side of the movable member 115 toward a corresponding wall surface of the slide groove 1141. The first limiting portion 1146 and the second limiting portion 1156 abut against each other to restrict a movement distance of the movable member 115. The first limiting portion 1146 may be but is not limited to a protrusion, a ridge, a platform, and the like, with no specific limitation herein. Similarly, the second limiting portion 1156 may be but is not limited to a protrusion, a ridge, a platform, and the like, with no specific limitation herein.

In some embodiments, there are two first limiting portions 1146, and the two first limiting portions 1146 are disposed on opposite groove walls of the slide groove 1141. For example, one first limiting portion 1146 is disposed on the first groove wall 11411, and another first limiting portion 1146 is disposed on the second groove wall 11412. Correspondingly, there are two second limiting portions 1156, and the two second limiting portions 1156 are disposed on opposite sides of the movable member 115. The two first limiting portions 1146 correspond one-to-one with the two second limiting portions 1156 to abut against each other, restricting the movement distance of the movable member 115.

By adopting the above technical solution, accurate movement of the movable member 115 to the preset position is effectively achieved, thereby effectively enhancing reliability of the connector 11.

In some embodiments of the present application, referring to FIG. 4, the first limiting portion 1146 is disposed at an end of the slide groove 1141 facing away from the second coupling 112.

By adopting the above technical solution, the movable member 115 is capable of moving to the preset position more accurately, and a risk of the movable member 115 separating from the slide groove 1141 and falling out via a port of the slide groove 1141 facing away from the second coupling 112 during movement is reduced, thereby effectively enhancing reliability of the connector 11.

In some embodiments of the present application, the slide groove 1141 passes through an end of the shielding member 114 facing away from the second coupling 112 to form a first groove opening, and a first chamfered surface is provided on at least one side of an end of the movable member 115 facing the second coupling 112.

The first groove opening is configured to provide a space for the movable member 115 to enter or exit the slide groove 1141. A first chamfered surface is provided on at least one side of an end of the movable member 115 facing the second coupling 112. For example, under the condition that the movable member 115 includes a first elastic arm 1152, the first chamfered surface is provided on a second pressing portion 11522 of the first elastic arm 1152, and the first chamfered surface is disposed on a side of a second protruding portion 11523 facing the second coupling 112. For another example, under the condition that the movable member 115 includes a second elastic arm 1153, the first chamfered surface is provided on a fourth pressing portion 11532 of the second elastic arm 1153, and the first chamfered surface is disposed on a side of a fourth protruding portion 11533 facing the second coupling 112.

In some embodiments of the present application, the slide groove 1141 passes through an end of the shielding member 114 facing the second coupling 112 to form a second groove opening, and a second chamfered surface is provided on at least one side of an end of the movable member 115 facing away from the second coupling 112.

The second groove opening is configured to provide a space for the movable member 115 to enter or exit the slide groove 1141. A second chamfered surface is provided on at least one side of an end of the movable member 115 facing away from the second coupling 112. For example, under the condition that the movable member 115 includes a pulling end 1155 described below, the second chamfered surface is provided on opposite sides of the pulling end 1155.

In some embodiments of the present application, the slide groove 1141 passes through an end of the shielding member 114 facing away from the second coupling 112 to form a first groove opening, a first chamfered surface is provided on at least one side of an end of the movable member 115 facing the second coupling 112, the slide groove 1141 passes through an end of the shielding member 114 facing the second coupling 112 to form a second groove opening, and a second chamfered surface is provided on at least one side of an end of the movable member 115 facing away from the second coupling 112.

By adopting the above technical solution, the movable member 115 is capable of being assembled into the slide groove 1141 along the chamfered surface, facilitating assembly of the movable member 115, thereby effectively enhancing ease of use of the connector 11.

In some embodiments of the present application, referring to FIG. 4 and FIG. 5 together, an end of the movable member 115 facing away from the second coupling 112 is a pulling end 1155, and under the condition that the first coupling 111 and the second coupling 112 are properly connected, the second coupling 112 pushes the movable member 115, causing the pulling end 1155 to extend outside the shielding member 114.

The pulling end 1155 is configured to provide working personnel with a gripping space for removing the movable member 115 from the slide groove 1141. Under the condition that the first coupling 111 and the second coupling 112 are properly connected, the pulling end 1155 extends outside the shielding member 114. For example, under the condition that the slide groove 1141 passes through an end of the shielding member 114 facing away from the second coupling 112 to form a first groove opening, the pulling end 1155 extends outside the shielding member 114 via the first groove opening. In this case, a working personnel can grasp the pulling end 1155 to remove the movable member 115 from the slide groove 1141, and an external apparatus is capable of identifying the identification portion 113, thereby further enhancing accuracy of working personnel in determining whether the first coupling 111 and the second coupling 112 are properly connected.

In some embodiments of the present application, referring to FIG. 4 and FIG. 5 together, the pulling end 1155 is provided with a gripping opening 11551.

In some embodiments of the present application, the pulling end 1155 is provided with an anti-slip structure.

The anti-slip structure may be but is not limited to a protrusion array structure, a frosted surface structure, or a notch array structure, with no specific limitation herein.

By adopting the above technical solution, it is convenient for working personnel to grasp the pulling end 1155 and remove the movable member 115 from the slide groove 1141.

In some embodiments of the present application, referring to FIG. 6, the first coupling 111 includes a coupling main body 1111 and a first snap-fit member 1112 connected to the coupling main body 1111, and the first snap-fit member 1112 is snap-fitted to the second coupling 112.

The coupling main body 1111 is a main body part of the first coupling 111, and the first snap-fit member 1112 is configured to connect the coupling main body 1111 and the second coupling 112. In some embodiments, one end of the first snap-fit member 1112 is connected to the coupling main body 1111, a first hook is provided on another end of the first snap-fit member 1112, the second coupling 112 includes a flange, and the first hook is snap-fitted to the flange. In other words, the first coupling 111 and the second coupling 112 are connected via a snap-fit manner.

By adopting the above technical solution, it is convenient to connect the first coupling 111 and the second coupling 112 together.

In some embodiments of the present application, under the condition that the first coupling 111 and the second coupling 112 are not properly connected, an end of the movable member 115 proximate to the second coupling 112 is disposed between the coupling main body 1111 and the first snap-fit member 1112.

It can be understood that under the condition that the first coupling 111 and the second coupling 112 are not properly connected, at least a portion of the movable member 115 extends outside the slide groove 1141. For example, under the condition that the slide groove 1141 passes through an end of the shielding member 114 facing the second coupling 112 to form a second groove opening, an end of the movable member 115 proximate to the second coupling 112 extends outside the slide groove 1141 via the second groove opening, and a portion of the movable member 115 extending outside the slide groove 1141 is disposed between the coupling main body 1111 and the first snap-fit member 1112, such that the first snap-fit member 1112 shields the portion of the movable member 115 extending outside the slide groove 1141.

By adopting the above technical solution, under the condition that the first coupling 111 and the second coupling 112 are not properly connected, the first snap-fit member 1112 serves to shield an end of the movable member 115 proximate to the second coupling 112, thereby reducing a risk of the movable member 115 moving along the first direction due to collision with external objects, effectively enhancing reliability of the connector 11.

In some embodiments of the present application, referring to FIG. 6, the first coupling 111 further includes a second snap-fit member 1113 snap-fitted to the second coupling 112, and the first snap-fit member 1112 and the second snap-fit member 1113 are disposed on opposite sides of the coupling main body 1111.

The second snap-fit member 1113 is configured to connect the coupling main body 1111 and the second coupling 112. In some embodiments, one end of the second snap-fit member 1113 is connected to the coupling main body 1111, a second hook is provided on another end of the second snap-fit member 1113, the second coupling 112 includes a flange, and the second hook is snap-fitted to the flange.

By adopting the above technical solution, connection stability between the first coupling 111 and the second coupling 112 is effectively enhanced, thereby further reducing a risk of leakage in the connector 11.

In some embodiments of the present application, the identification portion 113 is disposed on the first coupling 111, and under the condition that the first coupling 111 and the second coupling 112 are properly connected, the second coupling 112 pushes the shielding member 114 to move along the first direction, such that the identification portion 113 is uncovered by the shielding member 114 and exposed to the external environment of the connector 11, or the identification portion 113 is capable of being exposed to the external environment of the connector 11 via the identification window, where the first direction is a direction from the second coupling 112 toward the first coupling 111.

In other words, in the embodiments, the identification portion 113 remains stationary, and under a pushing action of the second coupling 112, the shielding member 114 is capable of moving along the first direction to achieve relative movement between the identification portion 113 and the shielding member 114. In some embodiments, the shielding member 114 may be slidably connected to the first coupling 111. For example, a slide rail extending along the first direction is provided on the first coupling 111, and the shielding member 114 is slidably mounted on the slide rail. In other embodiments, the shielding member 114 may alternatively be slidably mounted on other components of the connector 11, with no specific limitation herein.

By adopting the above technical solution, under the condition that the first coupling 111 and the second coupling 112 are properly connected, the second coupling 112 pushes the shielding member 114 to move along the first direction, and the shielding member 114 moves to a preset position along the first direction, such that the identification portion 113 is uncovered by the shielding member 114 and exposed to the external environment of the connector 11, or the identification portion 113 is capable of being exposed to the external environment of the connector 11 via the identification window, facilitating recognition of the identification portion 113 by an external apparatus.

According to a second aspect, referring to FIG. 2, an embodiment of the present application further provides a cooling apparatus 10, including a first tube 12, a second tube 13, and the connector 11 according to any one of the above embodiments, where the first tube 12 is connected to the first coupling 111, and the second tube 13 is connected to the second coupling 112.

Since the cooling apparatus 10 provided in this embodiment of this application employs the connector according to any one of the above embodiments, reliability of the cooling apparatus 10 is effectively enhanced.

According to a third aspect, referring to FIG. 2, an embodiment of the present application further provides a battery 100, including the cooling apparatus 10 described above.

Since the battery 100 provided in this embodiment of this application employs the cooling apparatus 10 according to any one of the above embodiments, reliability of the battery 100 is effectively enhanced.

According to a fourth aspect, an embodiment of the present application further provides an electric device, including the battery 100 described above.

By adopting the battery 100 according to any one of the above embodiments, reliability of the electric device is effectively enhanced.

The foregoing descriptions are merely preferable embodiments of the present application, but are not intended to limit the present application. Any modification, equivalent replacement, or improvement made without departing from the spirit and principle of the present application shall fall within the protection scope of the present application.

## Claims

1. A connector, **characterized in that** the connector comprises:
a first coupling;
a second coupling, connected to the first coupling;
an identification portion, configured to be identified by an external apparatus;
a shielding member, wherein under the condition that the first coupling and the second coupling are not properly connected, the shielding member shields the identification portion; under the condition that the first coupling and the second coupling are properly connected, the identification portion is uncovered by the shielding member and exposed to an external environment of the connector, or the identification portion is capable of being exposed to the external environment of the connector via an identification window provided on the shielding member.

2. The connector according to claim 1, **characterized in that** the connector further comprises a movable member, wherein the identification portion is disposed on the movable member, and under the condition that the first coupling and the second coupling are properly connected, the second coupling pushes the movable member to move along a first direction, such that the identification portion is uncovered by the shielding member and exposed to the external environment of the connector, or the identification portion is capable of being exposed to the external environment of the connector via the identification window, the first direction being a direction from the second coupling toward the first coupling.

3. The connector according to claim 2, **characterized in that** the connector comprises a slide groove extending along the first direction, and the movable member is slidably disposed within the slide groove.

4. The connector according to claim 3, **characterized in that** a drive structure is provided between a groove wall of the slide groove and the movable member; under the condition that the first coupling and the second coupling are properly connected, the second coupling pushes the movable member to trigger the drive structure, the drive structure providing a driving force for the movable member to move along the first direction, such that the identification portion is uncovered by the shielding member and exposed to the external environment of the connector, or the identification portion is capable of being exposed to the external environment of the connector via the identification window.

5. The connector according to claim 4, **characterized in that** the slide groove comprises a first groove wall, a first pressing portion is protrudingly provided on the first groove wall, the movable member comprises a main body portion and a first elastic arm, the identification portion is disposed on the main body portion, the first elastic arm is disposed at an end of the main body portion proximate to the second coupling, and the first elastic arm elastically presses against the first pressing portion to form the drive structure.

6. The connector according to claim 5, **characterized in that** the first pressing portion comprises a first protruding portion and a first inclined surface, the first protruding portion is protrudingly provided on the first groove wall, the first inclined surface is located on a side of the first protruding portion facing away from the second coupling and connects between the first groove wall and an end of the first protruding portion facing away from the first groove wall, and the first protruding portion and the first inclined surface sequentially elastically press against the first elastic arm along the first direction.

7. The connector according to claim 5 or 6, **characterized in that** the first elastic arm comprises a first arm body disposed on the main body portion and a second pressing portion protrudingly provided on the first arm body, and the second pressing portion presses against the first pressing portion.

8. The connector according to claim 7, **characterized in that** the second pressing portion comprises a second protruding portion and a second inclined surface, the second protruding portion is protrudingly provided on the first arm body, and the second inclined surface is located on a side of the second protruding portion facing away from the second coupling and connects between the first arm body and an end of the second protruding portion facing away from the first arm body.

9. The connector according to any one of claims 5 to 8, **characterized in that** the slide groove comprises a second groove wall disposed opposite to the first groove wall, a third pressing portion is protrudingly provided on the second groove wall, the movable member further comprises a second elastic arm, the second elastic arm is disposed opposite to the first elastic arm and at an end of the main body portion proximate to the second coupling, the first elastic arm elastically presses against the first pressing portion, and the second elastic arm elastically presses against the third pressing portion to form the drive structure.

10. The connector according to claim 9, **characterized in that** the third pressing portion comprises a third protruding portion and a third inclined surface, the third protruding portion is protrudingly provided on the second groove wall, the third inclined surface is located on a side of the third protruding portion facing away from the second coupling and connects between the second groove wall and an end of the third protruding portion facing away from the second groove wall, and the third protruding portion and the third inclined surface sequentially elastically press against the second elastic arm along the first direction.

11. The connector according to claim 9 or 10, **characterized in that** the second elastic arm comprises a second arm body disposed on the main body portion and a fourth pressing portion protrudingly provided on the second arm body, and the fourth pressing portion presses against the third pressing portion.

12. The connector according to claim 11, **characterized in that** the fourth pressing portion comprises a fourth protruding portion and a fourth inclined surface, the fourth protruding portion is protrudingly provided on the second arm body, and the fourth inclined surface is located on a side of the fourth protruding portion facing away from the second coupling and connects between the second arm body and an end of the fourth protruding portion facing away from the second arm body.

13. The connector according to any one of claims 9 to 12, **characterized in that** the first elastic arm is capable of pressing against the first groove wall after separating from the first pressing portion, and/or the second elastic arm is capable of pressing against the second groove wall after separating from the third pressing portion.

14. The connector according to any one of claims 9 to 13, **characterized in that** a width of the main body portion is greater than a distance between the first pressing portion and the third pressing portion.

15. The connector according to claim 4, **characterized in that** the slide groove comprises a first groove wall, a third elastic arm is provided on the first groove wall, the movable member comprises a main body portion and a fifth pressing portion, the identification portion is disposed on the main body portion, the fifth pressing portion is disposed at an end of the main body portion proximate to the second coupling, and the third elastic arm elastically presses against the fifth pressing portion to form the drive structure.

16. The connector according to claim 15, **characterized in that** a fifth inclined surface is provided on a side of the fifth pressing portion facing the first groove wall, the fifth inclined surface inclines from a side of the main body portion toward the first groove wall in a direction away from the first groove wall, and the third elastic arm elastically presses against the fifth inclined surface.

17. The connector according to claim 15 or 16, **characterized in that** the third elastic arm comprises a third arm body disposed on the first groove wall and a sixth pressing portion protrudingly provided on the third arm body, and the sixth pressing portion presses against the fifth pressing portion.

18. The connector according to claim 17, **characterized in that** the sixth pressing portion comprises a fifth protruding portion and a sixth inclined surface, the fifth protruding portion is protrudingly provided on the third arm body, and the sixth inclined surface is located on a side of the fifth protruding portion facing the second coupling and connects between the third arm body and an end of the fifth protruding portion facing away from the third arm body.

19. The connector according to any one of claims 15 to 18, **characterized in that** the first groove wall is recessed to provide a first accommodating cavity, and at least a portion of the third elastic arm is accommodated within the first accommodating cavity.

20. The connector according to any one of claims 15 to 19, **characterized in that** the slide groove comprises a second groove wall disposed opposite to the first groove wall, a fourth elastic arm is provided on the second groove wall, the third elastic arm elastically presses against the fifth pressing portion, and the fourth elastic arm elastically presses against the fifth pressing portion to form the drive structure.

21. The connector according to claim 20, **characterized in that** a seventh inclined surface is provided on a side of the fifth pressing portion facing the second groove wall, the seventh inclined surface inclines from a side of the main body portion toward the second groove wall in a direction away from the second groove wall, and the fourth elastic arm elastically presses against the seventh inclined surface.

22. The connector according to claim 20 or 21, **characterized in that** the fourth elastic arm comprises a fourth arm body disposed on the second groove wall and a seventh pressing portion protrudingly provided on the fourth arm body, and the seventh pressing portion presses against the fifth pressing portion.

23. The connector according to claim 22, **characterized in that** the seventh pressing portion comprises a sixth protruding portion and an eighth inclined surface, the sixth protruding portion is protrudingly provided on the fourth arm body, and the eighth inclined surface is located on a side of the sixth protruding portion facing the second coupling and connects between the fourth arm body and an end of the sixth protruding portion facing away from the fourth arm body.

24. The connector according to any one of claims 20 to 23, **characterized in that** the second groove wall is recessed to provide a second accommodating cavity, and at least a portion of the fourth elastic arm is accommodated within the second accommodating cavity.

25. The connector according to any one of claims 3 to 24, **characterized in that** a limiting structure is provided between a groove wall of the slide groove and the movable member, and the limiting structure is configured to restrict a movement distance of the movable member along the first direction.

26. The connector according to claim 25, **characterized in that** the limiting structure comprises a first limiting portion and a second limiting portion, the first limiting portion is protrudingly provided on a groove wall of the slide groove, the second limiting portion is protrudingly provided on the movable member, and the first limiting portion is configured to abut against the second limiting portion.

27. The connector according to claim 26, **characterized in that** the first limiting portion is disposed at an end of the slide groove facing away from the second coupling.

28. The connector according to any one of claims 3 to 27, **characterized in that**:
the slide groove passes through an end of the shielding member facing away from the second coupling to form a first groove opening, and a first chamfered surface is provided on at least one side of an end of the movable member facing the second coupling; and/or,
the slide groove passes through an end of the shielding member facing the second coupling to form a second groove opening, and a second chamfered surface is provided on at least one side of an end of the movable member facing away from the second coupling.

29. The connector according to any one of claims 2 to 28, **characterized in that** an end of the movable member facing away from the second coupling is a pulling end, and under the condition that the first coupling and the second coupling are properly connected, the second coupling pushes the movable member, such that the pulling end protrudes from an exterior of the shielding member.

30. The connector according to claim 29, **characterized in that** the pulling end is provided with a gripping opening and/or an anti-slip structure.

31. The connector according to any one of claims 2 to 30, **characterized in that** the first coupling comprises a coupling main body and a first snap-fit member connected to the coupling main body, and the first snap-fit member is snap-fitted to the second coupling.

32. The connector according to claim 31, **characterized in that** under the condition that the first coupling and the second coupling are not properly connected, an end of the movable member proximate to the second coupling is disposed between the coupling main body and the first snap-fit member.

33. The connector according to claim 31 or 32, **characterized in that** the first coupling further comprises a second snap-fit member snap-fitted to the second coupling, and the first snap-fit member and the second snap-fit member are disposed on opposite sides of the coupling main body.

34. The connector according to claim 1, **characterized in that** the identification portion is disposed on the first coupling, and under the condition that the first coupling and the second coupling are properly connected, the second coupling pushes the shielding member to move along a first direction, such that the identification portion is uncovered by the shielding member and exposed to the external environment of the connector, or the identification portion is capable of being exposed to the external environment of the connector via the identification window, the first direction being a direction from the second coupling toward the first coupling.

35. A cooling apparatus **characterized by** comprising a first tube, a second tube, and the connector according to any one of claims 1 to 34, wherein the first tube is connected to the first coupling, and the second tube is connected to the second coupling.

36. A battery comprising the cooling apparatus according to claim 35.

37. An electric device comprising the battery according to claim 36.
